# EUROPÄISCHE PATENTANMELDUNG

(11) **EP 3 995 366 A1**
(43) Veröffentlichungstag der Anmeldung: **11.05.2022**
(21) Anmeldenummer: 21201135.7
(22) Anmeldetag: 01.12.2017
(51) Int. Cl.: B60S 3/06

(54) **BÜRSTENBEFESTIGUNGSVORRICHTUNG FÜR EINE FAHRZEUGWASCHANLAGE UND FAHRZEUGWASCHANLAGE**

(62) Teilanmeldung aus: 17808079.2
(71) Anmelder: Alfred Kärcher SE & Co. KG, 71364 Winnenden (DE)
(72) Erfinder: Speckmaier, André, 71364 Winnenden (DE); Veitz, Yann, 71364 Winnenden (DE); Feistkorn, Ingo, 71364 Winnenden (DE); Heid, Claus, 71364 Winnenden (DE)
(74) Vertreter: DTS Patent- und Rechtsanwälte Schnekenbühl und Partner mbB

(57) **Zusammenfassung**

Die Erfindung betrifft eine Bürstenbefestigungsvorrichtung zum Befestigen einer Bürsteneinrichtung (28) in einer Fahrzeugwaschanlage (10), welche Bürstenbefestigungsvorrichtung (30; 150; 160) zum Halten an einem Träger (26) der Fahrzeugwaschanlage (10) eine Trageinrichtung (32) umfasst, eine Dreheinrichtung (34) mit einer an der Trageinrichtung (32) drehbar gehaltenen Dreheinheit (50) und mit mindestens einem Drehorgan (52; 152), wobei die Dreheinheit (50) eine in Höhenrichtung ausgerichtete Drehachse (62) definiert und mittels des mindestens einen Drehorgans (52; 152) von einer ersten Betriebsstellung in mindestens eine zweite Betriebsstellung um die Drehachse (62) drehbar ist, eine an der Dreheinheit (50) gehaltene Schwenkeinrichtung (36), die eine relativ zur Dreheinheit (50) um eine im Winkel zur Drehachse (62) ausgerichtete Schwenkachse (102) schwenkbare Schwenkeinheit (94) umfasst, an der die Bürsteneinrichtung (28) mit in einer Höhenrichtung ausgerichteten Bürstenachse (126) festgelegt oder festlegbar ist, wobei die Schwenkeinrichtung (36) ein Schwenkorgan (96) umfasst zum Verschwenken der Schwenkeinheit (94) relativ zur Dreheinheit (50). Außerdem betrifft die Erfindung eine Fahrzeugwaschanlage.

## Beschreibung

Die vorliegende Erfindung betrifft eine Bürstenbefestigungsvorrichtung zum Befestigen einer Bürsteneinrichtung in einer Fahrzeugwaschanlage.

Außerdem betrifft die vorliegende Erfindung eine Fahrzeugwaschanlage.

Bei Fahrzeugwaschanlagen kommen Bürsteneinrichtungen mit Karosseriebürsten zum Einsatz. Mit den Karosseriebürsten, insbesondere Seitenbürsten, können beispielsweise Seitenflächen des Fahrzeugs gereinigt werden. Bekannt ist, die Seitenbürsten quer zu einer Fahrzeuglängsrichtung zu verschieben, um eine Reinigung des Hecks und/oder der Front des Fahrzeugs durchzuführen. Zu diesem Zweck ist die Bürsteneinrichtung an einer Trageinrichtung gehalten, wobei die Trageinrichtung an einem Träger der Fahrzeugwaschanlage insbesondere quer zur Längsrichtung beweglich ist. Dies gibt die Möglichkeit, die Bürsteneinrichtung entlang des Hecks oder der Front zu verfahren. Durch eine Relativbewegung der Bürsteneinrichtung in der Längsrichtung des Fahrzeuges können dessen Seitenflächen gereinigt werden. Dabei ist es bekannt, dass die Fahrzeugwaschanlage eine Portalwaschanlage ist mit einem relativ zum stationären Fahrzeug verfahrbaren Waschportal. Alternativ kann die Fahrzeugwaschanlage eine Waschstraße sein, bei der ein Fahrzeug mittels einer Fördereinrichtung relativ zu stationären Trägern bewegt werden kann, an denen die Bürsteneinrichtungen angeordnet sind.

Um eine möglichst gute Reinigung unterschiedlicher Karosserieformen zu erzielen ist es bekannt, dass Bürsteneinrichtungen, die eine in Höhenrichtung ausgerichtete Bürstenachse aufweisen, verschwenkbar ausgebildet sein können, wobei unter "in Höhenrichtung" vorliegend insbesondere eine Ausrichtung der Bürstenachse nach oben weg von einer Aufstellfläche verstanden werden kann. Die Verschwenkung der Bürsteneinrichtung gibt zum einen die Möglichkeit, eine konturangepasste Reinigung des Fahrzeugs durchzuführen. Dies ist insbesondere bei relativ zur Vertikalen geneigten Seitenflächen, Heckflächen und Frontflächen des Fahrzeugs von Vorteil. Außerdem wird durch die Verschwenkung der Bürsteneinrichtung eine Vergleichmäßigung des Anpressdrucks von Waschelementen der Bürsteneinrichtung auf der Fahrzeugoberfläche ermöglicht. Dies ist wünschenswert, um ein gutes Reinigungsergebnis zu erzielen, jedoch ist kein so hoher Anpressdruck gewünscht, dass Schäden am Fahrzeug auftreten.

Die JP S59-54349 U beschreibt eine Befestigungsvorrichtung für eine Bürsteneinrichtung. Die Befestigungsvorrichtung umfasst einen an einer Trageinrichtung um eine in Höhenrichtung ausgerichtete Drehachse drehbare Dreheinheit. Mittels eines Drehorgans kann die Dreheinheit um einen Drehwinkel von beispielsweise ungefähr 90° gedreht werden. Die Bürsteneinrichtung ist oberhalb der Dreheinheit pendelnd um eine horizontale Achse aufgehängt. Durch Kontakt mit dem Fahrzeug schwenkt die Bürsteneinrichtung um die zuletzt genannte Achse und passt sich der Fahrzeugkontur an. Durch Verdrehen der Dreheinheit kann dieser Vorteil auch bei der Reinigung des Hecks oder der Front des Fahrzeugs erzielt werden. Als nachteilig erweist sich die pendelnde Aufhängung der Bürsteneinrichtung oberhalb der Dreheinheit. Dies führt zu einer beträchtlichen Bauhöhe der Bürstenbefestigungsvorrichtung, zumal eine Antriebseinheit für die Bürsteneinrichtung axial oberhalb der Dreheinheit positioniert ist. Die Bauhöhe der Bürsteneinrichtung führt zu einer hohen Masse. Dies zieht einen hohen Anpressdruck der Waschelemente an den Fahrzeugflächen nach sich, was sich insbesondere bei der Reinigung von Kleinfahrzeugen, als nachteilig erweist.

Weitere Ausführungsformen von schwenkbar und/oder drehbar gehaltenen Bürsteneinrichtungen an Fahrzeugwaschanlagen sind in der WO 2009/065715 A1, der WO 2016/030218 A1, der DE 298 14 758 U1, der JP H05-213163 A und der JP 2010-158945 A beschrieben.

Für eine konturangepasste Reinigung von Fahrzeugen ist es außerdem bekannt, dass die Bürsteneinrichtungen Waschelemente aufweisen können, die im angetriebenen Zustand eine nicht-zylindrische Kontur der Bürsteneinrichtung definieren. Eine derartige Bürsteneinrichtung ist zum Beispiel in der DE 10 2006 017 999 A1 beschrieben.

Aufgabe der vorliegenden Erfindung ist es, eine Bürstenbefestigungsvorrichtung und eine Fahrzeugwaschanlage bereitzustellen, mit der eine bessere Positionierung der Bürsteneinrichtung an einem Fahrzeug im Hinblick auf ein besseres Reinigungsergebnis möglich ist.

Diese Aufgabe wird durch eine erfindungsgemäße Bürstenbefestigungsvorrichtung zum Befestigen einer Bürsteneinrichtung in einer Fahrzeugwaschanlage gelöst, welche Bürstenbefestigungsvorrichtung zum Halten an einem Träger der Fahrzeugwaschanlage eine Trageinrichtung umfasst, eine Dreheinrichtung mit einer an der Trageinrichtung drehbar gehaltenen Dreheinheit und mit mindestens einem Drehorgan, wobei die Dreheinheit eine in Höhenrichtung ausgerichtete Drehachse definiert und mittels des mindestens einen Drehorgans von einer ersten Betriebsstellung in mindestens eine zweite Betriebsstellung um die Drehachse drehbar ist, eine an der Dreheinheit gehaltene Schwenkeinrichtung, die eine relativ zur Dreheinheit um eine im Winkel zur Drehachse ausgerichtete Schwenkachse schwenkbare Schwenkeinheit umfasst, an der die Bürsteneinrichtung mit in einer Höhenrichtung ausgerichteten Bürstenachse festgelegt oder festlegbar ist, wobei die Schwenkeinrichtung ein Schwenkorgan umfasst zum Verschwenken der Schwenkeinheit relativ zur Dreheinheit.

Bei der erfindungsgemäßen Bürstenbefestigungsvorrichtung kommt eine Dreheinheit zum Einsatz, die relativ zur Trageinrichtung um eine in Höhenrichtung ausgerichtete Drehachse drehbar ist. Eine Schwenkeinheit ist relativ zur Dreheinheit schwenkbar. An der Schwenkeinheit ist die Bürsteneinrichtung mit einer in Höhenrichtung ausgerichteten Bürstenachse festgelegt oder festlegbar. Mittels des Schwenkorgans der Schwenkeinheit kann die Bürsteneinrichtung relativ zur Dreheinheit verschwenkt werden. Dies ermöglicht es, die Bürste so relativ zu einer Fahrzeugfläche (Seitenfläche, Fahrzeugheck und/oder Fahrzeugfront) anzustellen, dass die Bürsteneinrichtung an die Kontur des Fahrzeugs angepasst wird. Insbesondere kann die Bürsteneinrichtung mittels des Schwenkorgans in der angepassten Stellung gehalten werden. Dadurch kann sichergestellt werden, dass ein idealer Anpressdruck im Hinblick auf eine schonende aber wirksame Reinigung des Fahrzeugs erzielt wird. Durch Drehen der Dreheinheit mittels des mindestens einen Drehorgans kann die Bürsteneinrichtung um die in Höhenrichtung ausgerichtete Drehachse gedreht werden. Dies erlaubt es, den vorstehend genannten Vorteil sowohl bei einer Reinigung von Fahrzeugseitenflächen als auch bei einer Reinigung des Fahrzeughecks und/oder der Fahrzeugfront zu erzielen. Die Aufhängung der Bürsteneinrichtung drehbar um die in Höhenrichtung ausgerichtete Drehachse sorgt für ein geringes Trägheitsmoment bei der Drehung und für eine geringe Hebelwirkung auf die Trageinrichtung. Die erfindungsgemäße Bürstenbefestigungsvorrichtung weist dadurch eine hohe Robustheit auf und erweist sich auch nach zahlreichen Dreh- und Schwenkbewegungen als störungsfrei.

Die Drehachse und die Schwenkachse können sich schneiden. Sie können jedoch auch windschief zueinander angeordnet sein. Beispielsweise sind die Schwenkachse und die Drehachse quer und insbesondere senkrecht zueinander ausgerichtet. Im Falle windschiefer Achsen kann darunter verstanden werden, dass es eine Ebene gibt, welche die Drehachse enthält und quer und insbesondere senkrecht zu welcher die Schwenkachse ausgerichtet ist.

Es kann vorgesehen sein, dass die Drehachse senkrecht zu einer Aufstellfläche für das Fahrzeug und insbesondere vertikal ausgerichtet ist. Im bestimmungsgemäßen Gebrauch der Bürstenbefestigungsvorrichtung in einer Fahrzeugwaschanlage können deren Komponenten eine Berührebene definieren, die mit einer Ebene der Aufstellfläche für das Fahrzeug zusammenfällt.

In entsprechender Weise kann vorgesehen sein, dass die Schwenkachse paral-lel zu einer Aufstellfläche für das Fahrzeug und insbesondere horizontal ausgerichtet ist.

Es kann vorgesehen sein, dass die Bürsteneinrichtung in einer Grundstellung der Schwenkeinheit koaxial zur Dreheinheit ausgerichtet ist. Beispielsweise kann die Schwenkeinheit eine Grundstellung einnehmen, in der die Bürsteneinrichtung so ausgerichtet ist, dass die Bürstenachse mit der Drehachse zusammenfällt. In der Grundstellung ist die Bürsteneinrichtung vorzugsweise senkrecht zur vorstehend genannten Aufstellfläche ausgerichtet, insbesondere vertikal.

Die Bürsteneinrichtung ist vorteilhafterweise hängend an der Schwenkeinrichtung festgelegt oder festlegbar.

Als günstig erweist es sich, wenn die Schwenkeinheit an einer Unterseite der Dreheinheit gehalten ist, wobei vorzugsweise die Schwenkachse unterhalb der Trageinrichtung angeordnet ist. Dies gibt die Möglichkeit, eine kompakte Bauform zu erzielen und die bewegten Massen und sich ergebenden Momente gering zu halten. Abweichend von der in der JP S59-54349 U beschriebenen Bürstenbefestigungsvorrichtung kann die Bürsteneinrichtung insgesamt kürzer gebaut werden, wodurch die Masse der Bürsteneinrichtung verringert und Momente reduziert werden können. "Unterseite" bezieht sich vorliegend auf einen bestimmungsgemäßen Gebrauch der Bürstenbefestigungsvorrichtung in der Fahrzeugwaschanlage, wobei das Fahrzeug unterhalb des Trägers mit der daran gehaltenen Bürstenbefestigungsvorrichtung positioniert ist.

Günstig ist es, wenn die Trageinrichtung einen am Träger der Fahrzeugwaschanlage beweglich angeordneten Laufwagen umfasst oder ausbildet. Mit dem Laufwagen kann die Bürsteneinrichtung insbesondere quer zu einer Fahrzeuglängsrichtung bewegt werden. Dies ermöglicht eine Anpassung der Bürsteneinrichtung an unterschiedlich breite Fahrzeuge. Außerdem kann die Bürsteneinrichtung zur Reinigung des Fahrzeughecks und/oder der Fahrzeugfront in der Querrichtung bewegt werden.

Der Laufwagen umfasst beispielsweise einen Tragkörper, bei dem es sich zum Beispiel um einen Boden des Laufwagens handelt. Der Laufwagen kann vom Tragkörper abstehende und im Winkel zu diesem ausgerichtete Seitenteile aufweisen. In einem vom Tragkörper und den Seitenteilen zumindest teilweise begrenzten Aufnahmeraum können Komponenten der Dreheinrichtung angeordnet sein, zum Beispiel Komponenten der Dreheinheit und/oder vorteilhafterweise das mindestens eine Drehorgan.

Der Tragkörper ist beispielsweise zumindest abschnittsweise plattenförmig ausgestaltet.

Am Laufwagen können beispielsweise Rollen zum Verfahren oder Kufen zum Verschieben des Laufwagens relativ zum Träger gehalten sein. Die Rollen oder die Kufen sind beispielsweise an den vorstehend genannten Seitenteilen angeordnet. Es können Antriebsrollen und Führungsrollen vorgesehen sein.

Am Laufwagen ist vorteilhafterweise eine Antriebseinheit gehalten, mittels der der Laufwagen relativ zum Träger bewegbar ist. Die Antriebseinrichtung treibt zum Beispiel die vorstehend genannten Antriebsrollen zum Verfahren des Laufwagens an.

Günstig ist es, wenn das mindestens eine Drehorgan oberhalb eines Tragkörpers der Trageinrichtung angeordnet ist, an dem die Dreheinheit gehalten ist. Das mindestens eine Drehorgan ist auf diese Weise besser vor Schmutz und Reinigungsflüssigkeit während der Fahrzeugreinigung geschützt. Eine kompakte Bauform kann erzielt werden, wenn das mindestens eine Drehorgan oberhalb des Tragkörpers und zwischen den Seitenteilen angeordnet ist.

Das Drehorgan und/oder das Schwenkorgan können auf unterschiedliche Weise ausgestaltet sein. Beispielsweise sind das mindestens eine Drehorgan und/oder das Schwenkorgan pneumatisch, hydraulisch, mechanisch, elektrisch und/oder magnetisch ausgestaltet. Eine Kombination der vorstehend beschriebenen Funktionsweisen ist möglich.

Das mindestens eine Drehorgan und/oder das Schwenkorgan stehen vorteilhafterweise mit einer Steuereinrichtung insbesondere der Fahrzeugwaschanlage in Wirkverbindung. Es kann eine Erfassungseinrichtung vorgesehen sein, um eine Fahrzeugkontur und/oder einen Fahrzeugtyp zu erfassen, insbesondere zum Bestimmen der Position, Neigung und/oder Krümmung von Fahrzeugseitenflächen, eines Fahrzeughecks und/oder einer Fahrzeugfront. Abhängig von einem Signal der Erfassungseinrichtung kann die Steuereinrichtung das mindestens eine Drehorgan und/oder das Schwenkorgan ansteuern, um die Bürsteneinrichtung in eine gewünschte Stellung und Ausrichtung zur optimalen Fahrzeugreinigung zu bringen.

Das mindestens eine Drehorgan umfasst oder bildet vorteilhafterweise ein Kolbenzylinderaggregat, das beispielsweise pneumatisch wirksam ist. Ein Zylinder des Kolbenzylinderaggregats ist beispielsweise an der Trageinrichtung festgelegt, und ein Kolben des Kolbenzylinderaggregats ist an der Dreheinheit festgelegt oder mit dieser gekoppelt. Beim Einfahren oder Ausfahren des Kolbenzylinderaggregats kann auf die Dreheinheit eingewirkt werden, um diese relativ zur Trageinrichtung zu drehen.

Bei einer vorteilhaften Ausführungsform der Bürstenbefestigungsvorrichtung ist es günstig, wenn die Dreheinrichtung eine Antriebsbahn umfasst oder bildet und mindestens ein mit dieser in Eingriff stehendes Antriebselement, wobei die Antriebsbahn am mindestens einen Drehorgan festgelegt ist und das Antriebselement an der Dreheinheit oder umgekehrt. Es zeigt sich, dass aufgrund des Eingriffes zwischen der Antriebsbahn und dem mindestens einen Antriebselement eine besonders zuverlässige Funktion der Dreheinrichtung sichergestellt werden kann.

Günstigerweise sind die Antriebsbahn als Zahnstange und das Antriebselement als Zahnrad oder als Zahnradabschnitt ausgestaltet. Beispielsweise kommt als Zahnradabschnitt ein Zahnring oder Zahnringabschnitt zum Einsatz.

Möglich ist eine Triebstockverzahnung zwischen der Antriebsbahn und dem Antriebselement alternativ zur Verzahnung mittels Zahnstange und Zahnrad oder Zahnradabschnitt.

Vorteilhafterweise ist die Antriebsbahn relativ zur Trageinrichtung verschieblich ausgestaltet. Dabei ist günstigerweise vorgesehen, dass an der Trageinrichtung eine Führung für die Antriebsbahn angeordnet ist. Dies sichert eine zuverlässige Funktion der Dreheinrichtung.

Bei einer vorteilhaften Ausführungsform ist es günstig, wenn die Antriebsbahn oder das Antriebselement an einem Kolbenzylinderaggregat des mindestens einen Drehorgans festgelegt ist. Beispielsweise ist ein Kolbenzylinderaggregat vorgesehen, mit dem die Antriebsbahn, vorteilhafterweise geführt an der Trageinrichtung, verschoben wird. Die Antriebsbahn steht mit dem Antriebselement in Eingriff, das mit der Dreheinheit drehfest verbunden ist.

Günstigerweise ist vorgesehen, dass die Dreheinheit mittels des mindestens einen Drehorgans in zumindest einer Drehrichtung um mindestens 90° oder im Wesentlichen 90° drehbar ist.

Bei einer vorteilhaften Ausführungsform kann vorgesehen sein, dass die Dreheinheit mittels des mindestens einen Drehorgans in zwei einander entgegengesetzten Drehrichtungen von der ersten Betriebsstellung in eine zweite Betriebsstellung drehbar ist, wobei insbesondere eine Drehung um jeweils 90° oder im Wesentlichen 90° möglich ist. Beispielsweise wird die Dreheinheit um 90° ausgehend von der ersten Betriebsstellung in die zweite Betriebsstellung gedreht, um die geneigte Bürsteneinrichtung beim Übergang von der Reinigung der Seitenflächen des Fahrzeugs zur Reinigung des Hecks zu drehen. Die Drehung in die andere Drehrichtung kann zum Beispiel beim Übergang von der Reinigung der Seitenflächen zur Reinigung der Front des Fahrzeugs vorgenommen werden.

Es kann vorgesehen sein, dass nur ein Drehorgan vorhanden ist, mit dem die Drehung der Dreheinheit in die einander entgegengesetzten Drehrichtungen durchgeführt werden kann. Beispielsweise ist ein Kolbenzylinderaggregat mit einer Mehrzahl von Stellungen vorhanden, um die Drehung in beide Drehrichtungen zu ermöglichen.

Bei einer andersartigen vorteilhaften Ausführungsform umfasst die Dreheinrichtung zwei Drehorgane, wobei die Dreheinheit mit den Drehorganen in einander entgegengesetzten Drehrichtungen von der ersten Betriebsstellung in eine jeweilige zweite Betriebsstellung drehbar ist. Beispielsweise sind zwei Kolbenzylinderaggregate vorgesehen, wobei jedes Kolbenzylinderaggregat zum Drehen der Dreheinheit in eine Drehrichtung eingesetzt wird.

Es kann vorgesehen sein, dass die Dreheinheit mittels des mindestens einen Drehorgans schrittweise oder stufenlos drehbar ist. Dies gibt zum Beispiel die Möglichkeit, beim Übergang der Reinigung einer ersten Fahrzeugfläche zu einer im Winkel dazu ausgerichteten Fahrzeugfläche (insbesondere von der Seitenfläche zum Heck oder der Front oder umgekehrt) den Übergangsbereich konturangepasst mit der Bürsteneinrichtung zu reinigen. Beispielsweise wird die Dreheinheit zwischen der Seitenflächenreinigung und der Heckreinigung oder Frontreinigung wie vorstehend erwähnt insgesamt im Wesentlichen um 90° gedreht. Die Drehung kann kontinuierlich oder schrittweise erfolgen, insbesondere wenn die Bürsteneinrichtung entlang eines hinteren oder vorderen Eckbereichs des Fahrzeugs bewegt wird, so dass auch in den Eckbereichen eine besonders gute konturangepasste Reinigung des Fahrzeugs möglich ist.

Beispielsweise kommt zu diesem Zweck ein Drehorgan in Gestalt eines Spindelantriebs zum Einsatz.

Es kann vorgesehen sein, dass mittels des Schwenkorgans die Verschwenkung der Bürsteneinrichtung geändert wird, während eine Fahrzeugfläche gereinigt wird. Beispielsweise kann die Ausrichtung der Bürsteneinrichtung während der Reinigung der Fahrzeugseitenfläche und/oder der Reinigung des Hecks oder der Front verändert werden. Dies gibt die Möglichkeit, auch komplexe Fahrzeugkonturen zuverlässig zu reinigen, die Bereiche unterschiedlicher Neigung und/oder Krümmung aufweisen.

Es kann vorgesehen sein, dass die Trageinrichtung mindestens ein Anschlagelement umfasst oder ausbildet für die Dreheinheit bei deren Drehung von der ersten Betriebsstellung in die mindestens eine zweite Betriebsstellung und/oder umgekehrt. Dies stellt sicher, dass die Dreheinheit in der jeweiligen Betriebsstellung eine korrekte Position einnimmt, um die Lage der Schwenkachse zur korrekten Ausrichtung der Bürsteneinrichtung sicherzustellen.

Günstig ist es, wenn die Bürstenbefestigungsvorrichtung eine Sensoreinrichtung umfasst oder bildet zum Ermitteln, ob die Dreheinheit die erste Betriebsstellung und/oder die zweite Betriebsstellung einnimmt. Im Fall einer etwaigen Störung abhängig von einem Signal der Sensoreinrichtung kann beispielsweise eine Antriebseinheit der Bürsteneinrichtung außer Kraft gesetzt oder blockiert werden, um die Ursache der Störung zu beheben.

Für eine zuverlässige Funktion der Dreheinrichtung ist es günstig, wenn die Bürstenbefestigungsvorrichtung eine Lagereinrichtung umfasst zur Lagerung der Dreheinheit an der Trageinrichtung.

Die Lagereinrichtung umfasst vorteilhafterweise mindestens ein axiales Lager und/oder mindestens ein radiales Lager, bezogen auf die Drehachse. Über das mindestens eine axiale Lager kann die Dreheinheit in axialer Richtung an der Trageinrichtung gelagert werden. Mittels des mindestens einen radialen Lagers kann die Dreheinheit in radialer Richtung an der Trageinrichtung gelagert werden.

Günstigerweise sind das mindestens eine axiale Lager und/oder das mindestens eine radiale Lager als Gleitlager ausgebildet. Die Gleitlager sind wenig anfällig gegenüber Schmutz und Reinigungsflüssigkeit, die beim Reinigen des Fahrzeuges auftreten können.

Als vorteilhaft erweist es sich, wenn mindestens ein Lagerelement vorgesehen ist, das ein axiales Lager und ein radiales Lager ausbildet. Beispielsweise ist das Lagerelement ein Lagerring mit einem in Umfangsrichtung der Drehachse verlaufenden radialen Lagerabschnitt und einem radial verlaufenden, beispielsweise flanschartigen, Lagerabschnitt für die axiale Lagerung.

Bei einer vorteilhaften Ausführungsform der Bürstenbefestigungsvorrichtung erweist es sich als günstig, wenn die Dreheinheit einen ersten Drehkörper oberhalb eines Tragkörpers der Trageinrichtung umfasst und einen zweiten Drehkörper unterhalb des Tragkörpers, und wobei der Tragkörper eine Öffnung umfasst oder bildet, wobei die Drehkörper durch die Öffnung hindurch miteinander verbunden sind. Beispielsweise sind die Drehkörper mittels mindestens eines Verbindungselementes durch die Öffnung hindurch miteinander verbunden. Denkbar ist auch eine einstückige Verbindung der Drehkörper miteinander. Am oberen Drehkörper greift beispielsweise eine Kraft des mindestens einen Drehorgans an, die an den unteren Drehkörper unterhalb des Tragkörpers übertragen werden kann. Am unteren Drehkörper ist vorzugsweise die Schwenkeinrichtung und an dieser die Bürsteneinrichtung gehalten.

Die Drehkörper sind zum Beispiel zumindest abschnittsweise plattenförmig ausgestaltet.

Das mindestens eine Verbindungselement ist vorzugsweise als Spannelement ausgebildet, mit dem die Drehkörper relativ zueinander verspannt sind. Die zwischen den Drehkörpern wirkende Kraft kann vorzugsweise mittels des mindestens einen Spannelementes eingestellt werden. Beispielsweise ist eine Verschraubung als Spannelement vorgesehen.

Es kann vorgesehen sein, dass in der Öffnung mindestens ein zwischen den Drehkörpern positioniertes Abstandselement angeordnet ist. Über das mindestens eine Abstandselement sind die Drehkörper in zutreffender Solllage positioniert. Beispielsweise kann dabei zusätzlich eine Verspannung der Drehkörper relativ zueinander mittels des mindestens einen Spannelementes eingestellt werden.

Als Abstandselement ist zum Beispiel ein insbesondere koaxial zur Drehachse ausgerichteter Abstandsring vorgesehen. Alternativ oder ergänzend sind als Abstandselemente die Verbindungselemente umgebende Abstandshülsen vorgesehen.

Günstig ist es, wenn am Rand der Öffnung ein Statorkörper der Trageinrichtung festgelegt ist, wobei das Abstandselement über ein Lagerelement radial relativ zum Statorkörper gelagert ist und mindestens ein Drehkörper über das Lagerelement axial relativ zum Statorkörper gelagert ist. In radialer Richtung ist das Lagerelement, insbesondere ein Gleitlager, zwischen dem Abstandselement und dem Statorkörper wirksam. In axialer Richtung kann das Lagerelement, insbesondere als Gleitlager, eine axiale Lagerung zwischen dem Statorkörper und zumindest einen der Drehkörper sicherstellen. Vorzugsweise erfolgt eine axiale Lagerung zwischen dem Statorkörper und dem oberen Drehkörper einerseits und dem unteren Drehkörper andererseits. Zu diesem Zweck kann das Lagerelement flanschartige axiale Lagerabschnitte aufweisen. Zur radialen Lagerung weist das Lagerelement beispielsweise einen in Umfangsrichtung der Drehachse verlaufenden radialen Lagerabschnitt auf. Das Lagerelement kann einteilig sein oder mehrteilig, beispielsweise weist es ein oberes und ein unteres Segment auf.

Der Statorkörper ist beispielsweise über ihn in Umfangsrichtung der Drehachse umgebende Halteelemente am Rand der Öffnung unbeweglich fixiert.

Die Halteelemente bilden oder umfassen beispielsweise ein mit dem Statorkörper radial und/oder axial in Eingriff stehendes Scheibenpaket. Die Scheiben sind beispielsweise flache Ringe, die übereinander angeordnet und zum Beispiel mittels Verbindungselementen am Rand der Öffnung festgelegt sind. Die Ringe können axial und/oder radial mit dem Statorkörper in Eingriff stehen. Das Scheibenpaket ermöglicht es herstellungstechnisch einfach, den Statorkörper zu fixieren, etwaige Toleranzen auszugleichen und dadurch eine zuverlässige Funktion der Dreheinrichtung sicherzustellen.

Bei einer vorteilhaften Ausführungsform ist vorgesehen, dass entlang des Randes der Öffnung Trägerelemente angeordnet sind, die jeweils ein axiales Lager und/oder ein radiales Lager halten, wobei ein Drehkörper an den axialen Lagern anliegt. Beispielsweise liegt der obere Drehkörper auf den axialen Lagern auf. Die Trägerelemente sind zum Beispiel in Umfangsrichtung der Öffnung gleichmäßig voneinander beabstandet.

Sind radiale Lager an den Trägerelementen vorgesehen, ist es günstig, wenn über die radialen Lager eine jeweilige Rolle relativ zum Trägerelement drehbar gelagert ist, an der die Dreheinheit bei Drehung um die Drehachse abrollt. Die Rollen können zum Beispiel an einem der Drehkörper abrollen. Denkbar ist, dass die vorstehend genannten Abstandselemente in Form von Abstandshülsen an einem gemeinsamen Halteelement gehalten sind, das an den Rollen abrollt.

Als vorteilhaft erweist es sich, wenn die Schwenkeinheit mittels des Schwenkorgans von einer Grundstellung in mindestens eine Schwenkstellung um mindestens 10° schwenkbar ist, vorzugsweise um mindestens 20°. In der Grundstellung ist die Bürstenachse vorzugsweise wie vorstehend erwähnt fluchtend zur Drehachse ausgerichtet. In der Schwenkstellung kann die Bürstenachse dementsprechend einen Winkel von mindestens ungefähr 10°, vorzugsweise mindestens ungefähr 20° zur Drehachse aufweisen.

Es kann vorgesehen sein, dass die Schwenkeinheit mittels des Schwenkorgans von einer Grundstellung in zwei einander entgegengesetzte Richtungen schwenkbar und in eine jeweilige Schwenkstellung überführbar ist.

Bei einer vorteilhaften Ausführungsform umfasst oder bildet das mindestens eine Schwenkorgan ein Kolbenzylinderaggregat, wobei ein Zylinder des Kolbenzylinderaggregats an der Dreheinheit festgelegt ist und ein Kolben des Kolbenzylinderaggregats an der Schwenkeinheit festgelegt oder mit dieser gekoppelt ist. Durch Ausfahren und Einfahren des Kolbenzylinderaggregats wird die Schwenkeinheit relativ zur Dreheinheit verschwenkt.

Günstigerweise umfasst die Bürstenbefestigungsvorrichtung eine Antriebseinheit zum Antreiben der Bürsteneinrichtung, wobei die Antriebseinheit an der Schwenkeinrichtung festgelegt ist, oder wobei die Antriebseinheit an der Schwenkeinheit angeordnet oder von dieser umfasst ist. Dies ermöglicht eine kompakte Bauform der Bürstenbefestigungsvorrichtung. Beispielsweise ist die Antriebseinheit Teil der Schwenkeinheit oder an der Schwenkeinheit gehalten.

Die kompakte Bauform wird dadurch begünstigt, dass bevorzugt eine Antriebswelle der Antriebseinheit eine Antriebsachse definiert, wobei die Antriebsachse vorzugsweise quer und insbesondere senkrecht zur Bürstenachse ausgerichtet ist. Beispielsweise sind die Antriebsachse und die Bürstenachse senkrecht zueinander und windschief positioniert, wobei eine Ebene existiert, relativ zu der die Antriebsachse senkrecht ausgerichtet ist und die die Bürstenachse enthält.

Für die kompakte Bauform ist es ferner günstig, wenn die Antriebseinheit im Wesentlichen zumindest teilweise seitlich neben dem Schwenkorgan positioniert ist. Beispielsweise ist unterhalb eines Drehkörpers der Dreheinheit das Schwenkorgan positioniert und im Wesentlichen seitlich neben diesem die Antriebseinheit.

Bei einer vorteilhaften Ausführungsform ist es günstig, wenn die Schwenkeinheit einen Schwenkwinkel umfasst oder ausbildet, der einen ersten Schenkel und einen zweiten Schenkel aufweist. Beispielsweise greift das Schwenkorgan, zum Beispiel mit dem Kolben eines Kolbenzylinderaggregates, am ersten Schenkel an. Der zweite Schenkel ist beispielsweise an der Dreheinheit verschwenkbar gelagert, wobei die Antriebseinheit an einer Unterseite des zweiten Schenkels gehalten ist. An der Antriebseinheit ist zum Beispiel die Bürsteneinrichtung festgelegt oder festlegbar. Dadurch ist die Bürsteneinrichtung über die Antriebseinheit indirekt an der Schwenkeinheit festgelegt oder festlegbar.

Bei einer andersartigen vorteilhaften Ausführungsform ist es günstig, wenn die Schwenkeinheit ein erstes Schwenkteil umfasst, an dem das Schwenkorgan angreift und ein im Abstand zum ersten Schwenkteil angeordnetes zweites Schwenkteil. Beispielsweise greift ein Kolben des Kolbenzylinderaggregates am ersten Schwenkorgan an. Das zweite Schwenkteil ist vorzugsweise an der Dreheinheit verschwenkbar gelagert. Die Antriebseinheit ist vorzugsweise zumindest teilweise zwischen den Schwenkteilen angeordnet und verbindet diese miteinander. Auf diese Weise kann die Antriebseinheit gewissermaßen Bestandteil der Schwenkeinheit sein. Die Bürsteneinrichtung ist an der Antriebseinheit oder am ersten Schwenkteil festgelegt oder festlegbar.

An der Dreheinheit ist vorteilhafterweise ein Schwenklager mit einem Dämpfungselement für eine schwingungsgedämpfte Lagerung der Schwenkeinheit gebildet. Beispielsweise ist als Dämpfungselement ein Kunststoffpuffer vorgesehen. Etwaige Vibrationen der angetriebenen Bürsteneinrichtung übertragen sich aufgrund des Dämpfungselementes nicht oder nur geschwächt auf die Dreheinrichtung und die Trageinrichtung.

Vorzugsweise ist zwischen der Schwenkeinheit und der Dreheinheit mindestens ein Dämpfungselement angeordnet zum Dämpfen der Schwenkbewegung. Zum Reduzieren der beim Verschwenken der Bürsteneinrichtung auftretenden Momente ist bevorzugt das mindestens eine Dämpfungselement vorgesehen. Dieses ist zum Beispiel als Kolbenzylinderaggregat ausgestaltet, das an der Schwenkeinheit und an der Dreheinheit angreift.

Es kann vorgesehen sein, dass die Dreheinheit mindestens ein Anschlagelement umfasst oder ausbildet für die Schwenkeinheit bei deren Verschwenkung relativ zur Dreheinheit.

Wie eingangs erwähnt, betrifft die vorliegende Erfindung auch eine Fahrzeugwaschanlage. Eine erfindungsgemäße Fahrzeugwaschanlage umfasst mindestens eine Bürstenbefestigungsvorrichtung und eine daran festgelegte Bürsteneinrichtung.

Die Vorteile, die bereits im Zusammenhang mit der Erläuterung der erfindungsgemäßen Bürstenbefestigungsvorrichtung erwähnt wurden, können bei der Fahrzeugwaschanlage ebenfalls erzielt werden. Diesbezüglich kann auf die voranstehenden Ausführungen verwiesen werden.

Vorteilhafte Ausführungsformen der Fahrzeugwaschanlage ergeben sich durch vorteilhafte Ausführungsformen der Bürstenbefestigungsvorrichtung. Auch diesbezüglich kann auf die voranstehenden Ausführungen verwiesen werden. Die Fahrzeugwaschanlage kann eine Portalwaschanlage oder eine Waschstraße sein.

Die nachfolgende Beschreibung bevorzugter Ausführungsformen der Erfindung dient im Zusammenhang mit der Zeichnung der näheren Erläuterung der Erfindung. Es zeigen:
- Figur 1:: schematisch eine erfindungsgemäße Fahrzeugwaschanlage mit zwei erfindungsgemäßen Bürstenbefestigungsvorrichtungen bei der Reinigung von Seitenflächen eines von hinten dargestellten Fahrzeugs;
- Figur 2:: eine vergrößerte Darstellung von Detail A in Figur 1, die die Bürstenbefestigungsvorrichtung mit einer eine Grundstellung einnehmenden Schwenkeinheit zeigt (übrige Komponenten der Fahrzeugwaschanlage sind nicht dargestellt);
- Figur 3:: eine Darstellung entsprechend Figur 2, bei der die Schwenkeinheit eine Schwenkstellung einnimmt, in Übereinstimmung mit der Darstellung gemäß Figur 1;
- Figur 4:: eine perspektivische Darstellung der Bürstenbefestigungsvorrichtung;
- Figur 5:: eine Darstellung entsprechend Figur 4, bei der eine Dreheinheit der Bürstenbefestigungsvorrichtung um im Wesentlichen 90° gedreht worden ist;
- Figur 6:: die Bürstenbefestigungsvorrichtung, die daran gehaltene Bürsteneinrichtung und das Fahrzeug in einer schematischen Seitenansicht bei der Reinigung eines Fahrzeughecks;
- Figur 7:: eine vergrößerte Schnittdarstellung der Bürstenbefestigungsvorrichtung, wobei eine Lagerung der Dreheinheit an einer Trageinrichtung dargestellt ist;
- Figur 8:: eine perspektivische Darstellung einer weiteren bevorzugten Ausführungsform einer erfindungsgemäßen Bürstenbefestigungsvorrichtung;
- Figur 9:: die Bürstenbefestigungsvorrichtung aus Figur 8 in einer Seitenansicht, betrachtet von der gegenüberliegenden Seite;
- Figur 10:: eine weitere perspektivische Darstellung der Bürstenbefestigungsvorrichtung aus Figur 8 unter Ausblendung einiger Komponenten;
- Figur 11:: eine vereinfachte Schnittdarstellung längs der Linie 11-11 in Figur 9;
- Figur 12:: eine Darstellung entsprechend Figur 11, bei der eine Dreheinheit der Bürstenbefestigungsvorrichtung um 90° gedreht worden ist;
- Figur 13:: eine Teilschnittdarstellung der Bürstenbefestigungsvorrichtung, wobei die Schnittebene längs der Linie 13-13 in Figur 11 verläuft; und
- Figur 14:: eine schematische Draufsicht auf eine weitere bevorzugte Ausführungsform einer erfindungsgemäßen Bürstenbefestigungsvorrichtung.

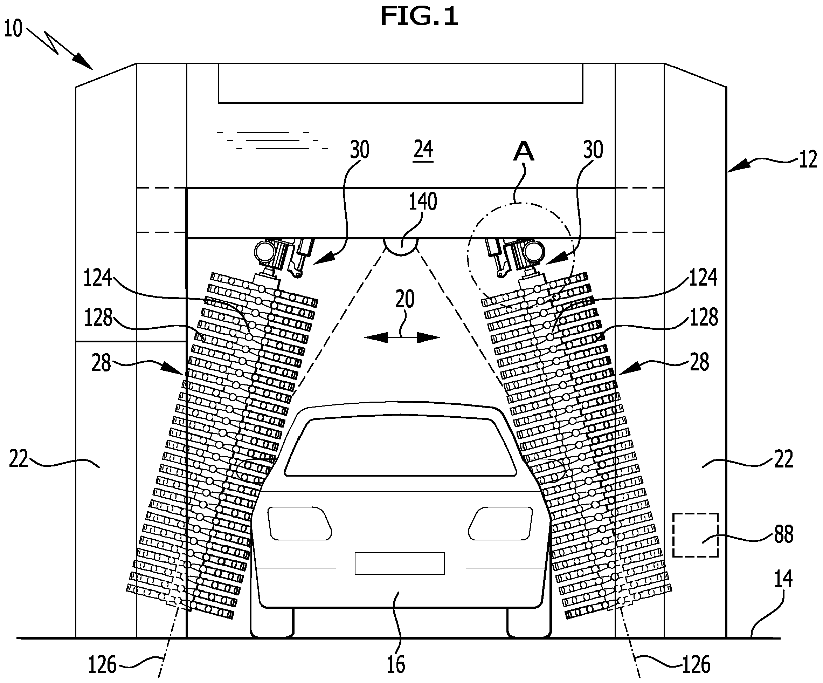

Die Figuren 1 bis 7 beziehen sich auf eine insgesamt mit dem Bezugszeichen 10 belegte vorteilhafte Ausführungsform einer erfindungsgemäßen Fahrzeugwaschanlage mit erfindungsgemäßer Bürstenbefestigungsvorrichtung. Die Fahrzeugwaschanlage 10 ist als Portalwaschanlage ausgestaltet und umfasst ein Waschportal 12. Das Waschportal 12 definiert eine Berührebene, die mit einer von einer Aufstellfläche 14 für ein Fahrzeug 16 definierten Ebene zusammenfällt. Vorliegend ist die Aufstellfläche 14 insbesondere horizontal ausgerichtet.

Positions- und Orientierungsangaben beziehen sich vorliegend insbesondere auf einen bestimmungsgemäßen Gebrauch der Fahrzeugwaschanlage mit horizontal ausgerichteter Aufstellfläche 14.

Das Waschportal 12 ist in an sich bekannter Weise relativ zu dem vorliegend stationären Fahrzeug 16 in dessen Längsrichtung 18 verschiebbar. Quer zur Längsrichtung 18 ist die Querrichtung 20 ausgerichtet.

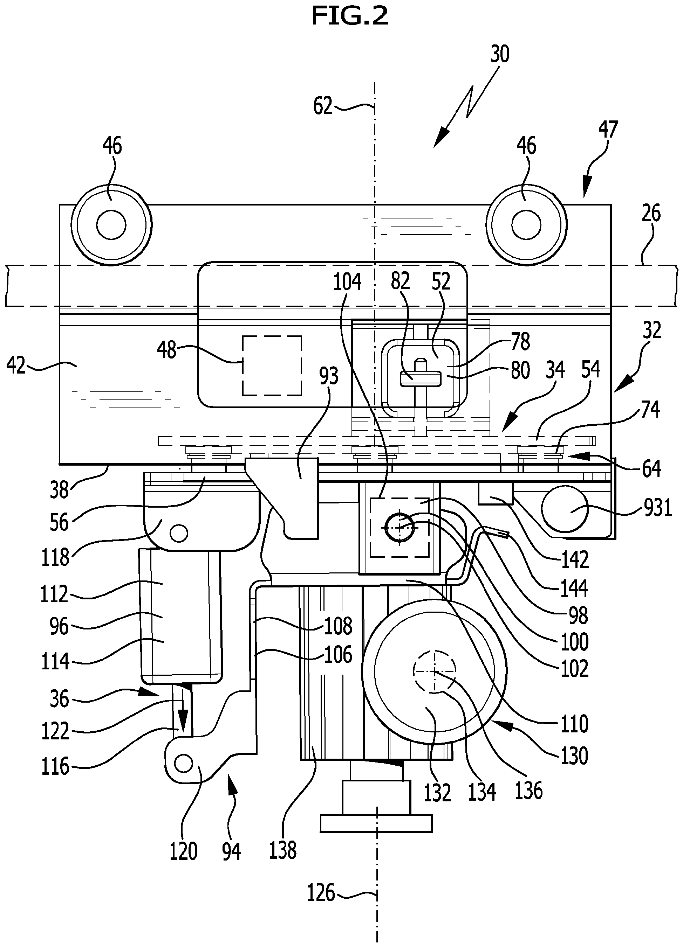

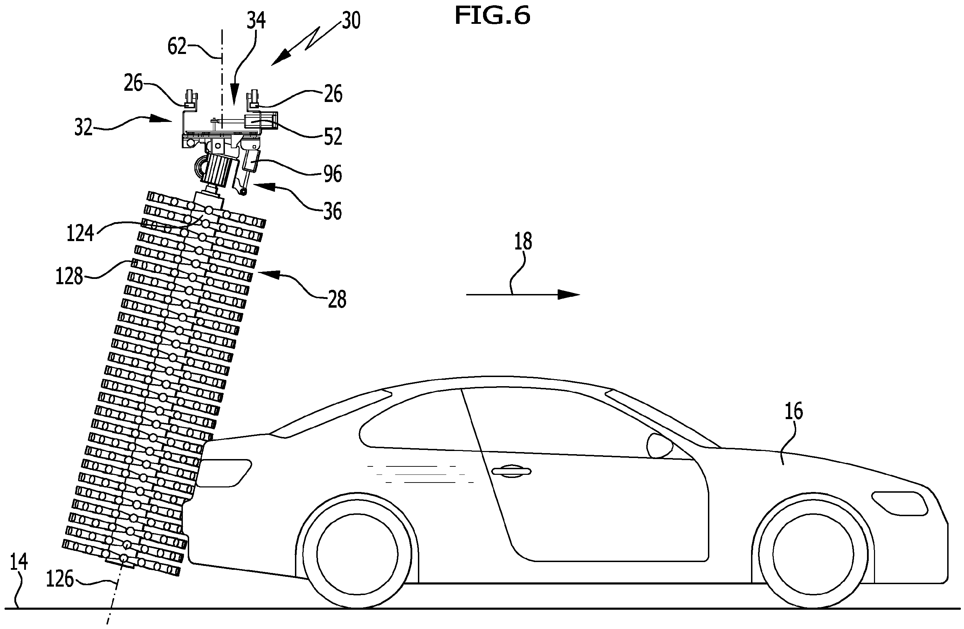

Das Waschportal 12 umfasst vorliegend zwei im Wesentlichen senkrecht ausgerichtete Träger 22, die oberhalb des Fahrzeugs 16 mittels einer Traverse 24 verbunden sind. Die Traverse 24 umfasst einen in Querrichtung 20 verlaufenden Träger 26 (Figuren 2 und 6).

Das Waschportal 12 umfasst vorliegend zwei Bürsteneinrichtungen 28 und diesen zugeordnete Bürstenbefestigungsvorrichtungen 30, bei denen es sich um vorteilhafte Ausführungsformen der Erfindung handelt. Die Bürstenbefestigungsvorrichtungen 30 werden nachfolgend vereinfacht als Vorrichtungen 30 bezeichnet.

Die Vorrichtungen 30 sind relativ zueinander spiegelsymmetrisch bezüglich einer Mittellängsebene des Waschportals 12 ausgestaltet. Aus diesem Grund wird nachfolgend nur auf eine Vorrichtung 30 eingegangen, hierbei handelt es sich um die in Figur 1 rechts dargestellte Vorrichtung 30. Die dieser zugeordnete Bürsteneinrichtung 28 ist aus Gründen der Klarheit nur in den Figuren 1 und 6 gezeigt, die Figuren 2 bis 5 und 8 bis 10 zeigen jedoch eine Bürstenachse 126. Nachfolgende Aussagen gelten entsprechend für die andere Vorrichtung 30 und die dieser zugeordnete Bürsteneinrichtung 28.

Die Bürsteneinrichtung 28 bildet eine Karosseriebürste, die zum Reinigen von Seitenflächen des Fahrzeugs 16 vorgesehen ist. Mit der Bürsteneinrichtung 28 können auch das Heck des Fahrzeugs und die Front des Fahrzeugs gereinigt werden. Dabei besteht insbesondere die Möglichkeit, die Neigung der Bürsteneinrichtung 28 an die Kontur des Fahrzeugs anzupassen. Insbesondere kann eine Anpassung an die Neigung der Seitenflächen des Fahrzeugs 16 und eine Anpassung an die Neigung des Hecks des Fahrzeugs 16 vorgenommen werden. Hierauf wird nachfolgend eingegangen.

Wie insbesondere aus den Figuren 2 bis 5 deutlich wird, umfasst die Vorrichtung 30 eine Trageinrichtung 32, eine Dreheinrichtung 34 und eine Schwenkeinrichtung 36.

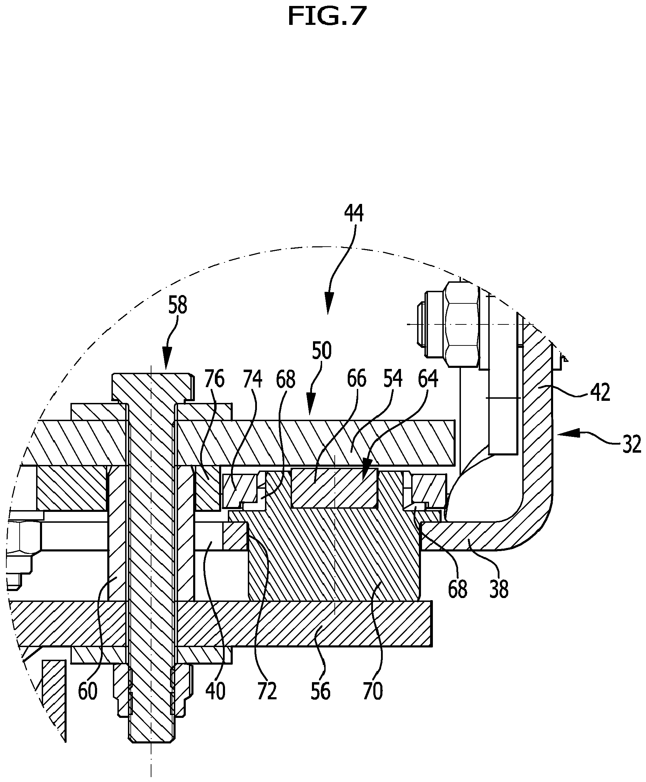

Die Trageinrichtung 32 dient zum Haltern der Vorrichtung 30 am Träger 26, der vorliegend zwei in Längsrichtung voneinander beabstandete Schienen umfasst. Die Trageinrichtung 32 ist von der Grundform näherungsweise ungefähr quaderförmig und umfasst einen Tragkörper 38. Vorliegend ist der Tragkörper 38 plattenförmig. Im Tragkörper 38 ist eine Öffnung 40 gebildet (Figur 7).

Die Trageinrichtung 32 umfasst Seitenteile 42. Die Seitenteile 42 sind mit dem Tragkörper 38 verbunden und stehen von diesem im Wesentlichen senkrecht ab. Die Seitenteile 42 sind in Längsrichtung voneinander beabstandet, so dass die Trageinrichtung 32 einen von den Seitenteilen 42 und dem Tragkörper 38 eingefassten Aufnahmeraum 44 ausbildet.

An den Seitenteilen 42 sind Rollen 46 angeordnet, wobei an jedem Seitenteil 42 zwei Rollen gehalten sind. Die Rollen 46 sind Antriebsrollen, die mittels einer in Figur 2 schematisch dargestellten Antriebseinheit 48 drehend antreibbar sind. Die Antriebseinheit 48 ist im Aufnahmeraum 44 angeordnet und an der Trageinrichtung 32 gehalten.

Die Trageinrichtung 32 bildet einen Laufwagen 47. Mittels der Antriebseinheit 48 und der Rollen 46 kann die Vorrichtung 30 am Träger 26 in der Querrichtung 20 verfahren werden. Dies gibt die Möglichkeit, die Positionen der Bürsteneinrichtungen 28 an die Breite des Fahrzeugs 16 anzupassen. Außerdem können die Bürsteneinrichtungen 28 nicht nur zur Reinigung der Seitenflächen eingesetzt werden, sondern auch zur Heckreinigung und zur Frontreinigung. Hierzu können die Vorrichtungen 30 hinter bzw. vor dem Fahrzeug in der Querrichtung 20 verfahren werden.

Die Dreheinrichtung 34 umfasst eine Dreheinheit 50 und ein Drehorgan 52 zum Drehen der Dreheinheit 50 relativ zur Trageinrichtung 32.

Die Dreheinheit 50 umfasst einen ersten Drehkörper 54 oberhalb des Tragkörpers 38 und einen zweiten Drehkörper 56 unterhalb des Tragkörpers 38. Beide Drehkörper 54, 56 sind vorliegend plattenförmig ausgestaltet und beispielsweise so dimensioniert, dass sie etwas über den Rand der Öffnung 40 hinausragen.

Die Drehkörper 54, 56 sind mittels Verbindungselementen 58 miteinander verbunden, wobei die Verbindungselemente 58 vorliegend durch Verschraubungen gebildet sind (Figur 7). Die Verbindungselemente 58 sind Spannelemente, wodurch eine gegenseitige Verspannung der Drehkörper 54, 56 auf einfache Weise vorgenommen und eingestellt werden kann. Abstandselemente 60 sind vorgesehen, um die Drehkörper 54, 56 in einen vorgesehenen Soll-Abstand zueinander zu bringen. Vorliegend sind die Abstandselemente 60 als Abstandshülsen ausgestaltet, die die Verbindungselemente 58 umgeben.

Die Dreheinheit 50 definiert über ihre Drehkörper 54, 56 eine Drehachse 62. Die Verbindungselemente 58 und die Abstandselemente 60 sind in Umfangsrichtung der Drehachse 62 vorzugsweise gleichmäßig voneinander beabstandet.

Die Drehachse 62 ist vorliegend in Höhenrichtung ausgerichtet und insbesondere senkrecht zur Aufstellfläche 14. Insbesondere ist die Drehachse 62 vertikal ausgerichtet.

Zum Lagern der Dreheinheit 50 an der Trageinrichtung 32 und insbesondere am Tragkörper 38 umfasst die Vorrichtung 30 eine Lagereinrichtung 64. Die Lagereinrichtung 64 umfasst axiale Lager 66 und radiale Lager 68. Einem jeweiligen Paar von axialen und radialen Lagern 66, 68 ist ein Trägerelement 70 zugeordnet (Figur 7).

Die Trägerelemente 70 sind am Rand der Öffnung 40 in entsprechenden Durchbrechungen 72 des Tragkörpers 38 positioniert. Jedes Trägerelement 70 nimmt an einer Oberseite ein axiales Lager 66 auf. Ein jeweiliges radiales Lager 68 ist ringförmig ausgestaltet und umgibt einen oberen Abschnitt des jeweiligen Trägerelementes 70.

Jedem Trägerelement 70 ist eine Rolle 74 zugeordnet, die um eine parallel zur Drehachse 62 ausgerichtete Achse drehbar relativ zum Trägerelement 70 ist. Mittels des radialen Lagers 68 ist die Rolle 74 relativ zum Trägerelement 70 gelagert.

Die Dreheinheit 50 liegt auf den axialen Lagern 66 auf, vorliegend über den ersten Drehkörper 54. Ein die Abstandselemente 60 haltendes Halteelement 76, vorliegend ringförmig, kann bei einer Drehung der Dreheinheit um die Drehachse 62 an den Rollen 74 abrollen.

Zum Drehen der Dreheinheit 50 umfasst die Dreheinrichtung 34 das Drehorgan 52. Vorliegend ist das Drehorgan als Kolbenzylinderaggregat 78 ausgestaltet mit einem Zylinder 80 und einem Kolben 82 (dieser umfasst auch die aus dem Zylinder 80 hervorstehende Kolbenstange).

Der Zylinder 80 ist an der Trageinrichtung 32 festgelegt, vorliegend an einem Seitenteil 42. Hierfür ist am Seitenteil 42 eine Aufnahme 84 gebildet. Der Kolben 42 greift mit einem dem Zylinder 80 abgewandten Ende am Drehkörper 54 an. Hierzu ist ein am Drehkörper 54 festgelegtes Kupplungselement 86 vorgesehen.

Das Kolbenzylinderaggregat 78 ist zum Schutz gegen Schmutz und Flüssigkeit oberhalb der Dreheinheit 50 und im Wesentlichen im Aufnahmeraum 44 angeordnet.

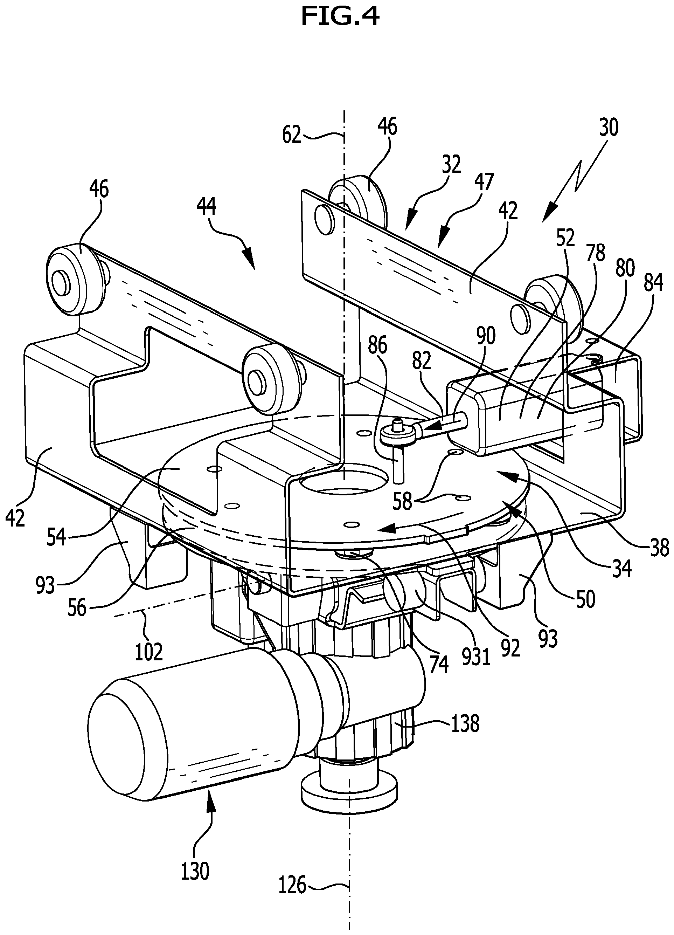

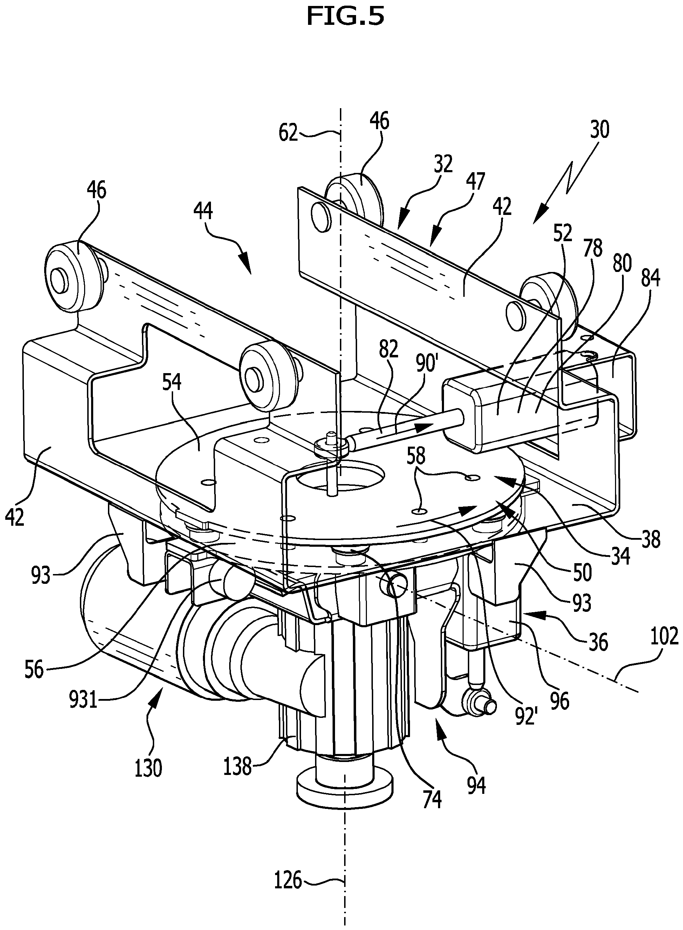

Die Fahrzeugwaschanlage 10 umfasst eine Steuereinrichtung 88. Die Steuereinrichtung 88 steht mit dem Drehorgan 52 in Wirkverbindung. Unter Ansteuerung durch die Steuereinrichtung 88 kann das Kolbenzylinderaggregat 78 von einer eingefahrenen Stellung (Figur 4) in eine ausgefahrene Stellung (Figur 5) ausgefahren werden. Dies wird durch den Pfeil 90 symbolisiert. Umgekehrt kann das Kolbenzylinderaggregat 78 von der ausgefahrenen Stellung in der Gegenrichtung 90' in die eingefahrene Stellung überführt werden (Figur 5).

Beim Betätigen des Kolbenzylinderaggregates 78 wird die Dreheinheit 50 um die Drehachse 62 relativ zur Trageinrichtung 32 um im Wesentlichen 90° gedreht. Die Pfeile 92 und 92' in den Figuren 4 bzw. 5 kennzeichnen die Drehrichtung der Dreheinheit 50.

An der Trageinrichtung 32, vorliegend an der Unterseite des Tragkörpers 38, sind Anschlagelemente 93 für die Dreheinheit 50 bei deren Drehung um die Drehachse 62 angeordnet. Korrespondierende Anschlagelemente 931 sind an der Dreheinheit 50 angeordnet.

Die Schwenkeinrichtung 36 ist an der Dreheinrichtung 34 und insbesondere der Dreheinheit 50 gehalten. Die Schwenkeinrichtung 36 ist unterhalb der Dreheinheit 50 angeordnet und insbesondere unterhalb der Trageinrichtung 32.

Die Schwenkeinrichtung 36 umfasst eine Schwenkeinheit 94 und ein Schwenkorgan 96, um diese zu verschwenken. Die Schwenkeinheit 94 ist an einem an der Unterseite des zweiten Drehkörpers 56 angeordneten Schwenklager 98 verschwenkbar gehalten. Zu diesem Zweck ist eine Welle 100 vorgesehen, die eine Schwenkachse 102 definiert.

Die Schwenkachse 102 ist im Winkel und insbesondere senkrecht zur Drehachse 62 ausgerichtet. Dabei sind die Drehachse 62 und die Schwenkachse 102 windschief zueinander angeordnet. Insbesondere ist die Schwenkachse 102 parallel zur Aufstellfläche und horizontal ausgerichtet.

Am Schwenklager 98 ist ein Dämpfungselement 104 angeordnet, um Vibrationen von der angetriebenen Bürsteneinrichtung 28 auf die Dreheinrichtung 34 und die Trageinrichtung 32 zu dämpfen. Das Dämpfungselement 104 umfasst beispielsweise einen Kunststoffpuffer.

Die Schwenkeinheit 94 umfasst einen Schwenkwinkel 106 mit einem ersten Schenkel 108 und einem zweiten Schenkel 110. Beispielsweise sind die Schenkel 108, 110 quer und im Wesentlichen im rechten Winkel zueinander ausgerichtet.

Über den ersten Schenkel 108 ist der Schwenkwinkel 106 und insbesondere die Schwenkeinheit 94 mit dem Schwenkorgan 96 gekoppelt. Der zweite Schenkel 110 ist am Schwenklager 98 um die Schwenkachse 102 schwenkbar gelagert.

Das Schwenkorgan 96 ist vorliegend ausgestaltet als Kolbenzylinderaggregat 112, das einen Zylinder 114 und einen Kolben 116 umfasst. Vorliegend ist der Zylinder 114 an einem Halteteil 118 gehalten. Das Halteteil 118 ist an der Dreheinheit 50 gehalten, insbesondere an einer Unterseite des zweiten Drehkörpers 96.

Der Kolben 116 ist mit dem ersten Schenkel 108 gekoppelt. Zu diesem Zweck ist am Schenkel 108 ein Kopplungsvorsprung 120 vorgesehen.

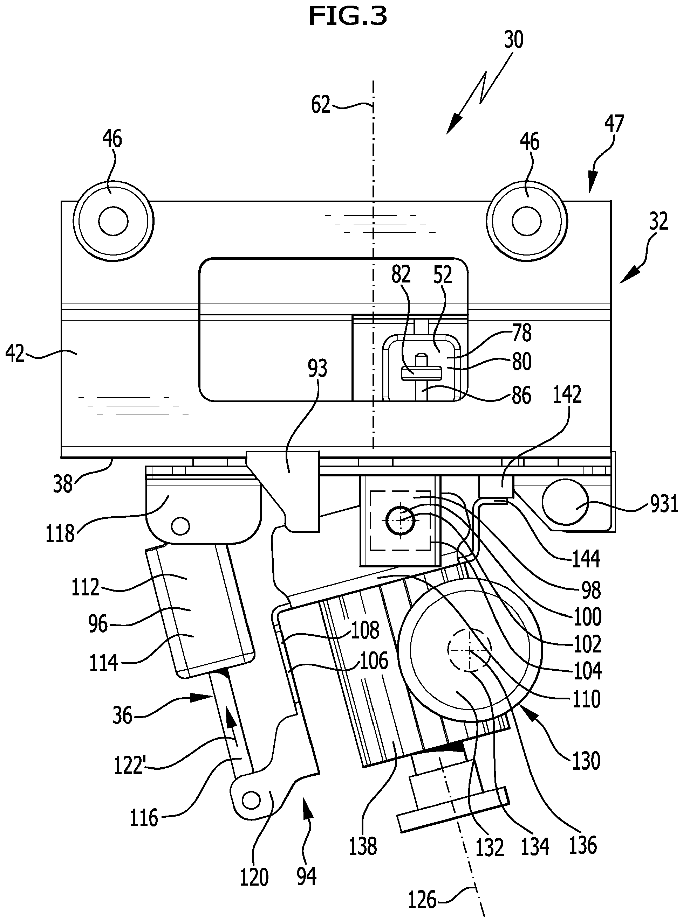

Das Schwenkorgan 96 steht mit der Steuereinrichtung 88 in Wirkverbindung. Unter Ansteuerung durch die Steuereinrichtung 88 kann das Kolbenzylinderaggregat 112 von einer eingefahrenen in eine ausgefahrene Stellung überführt werden (Figur 2, Pfeil 122). Dabei wird die Schwenkeinheit 94 um die Schwenkachse 102 verschwenkt. Umgekehrt kann das Kolbenzylinderaggregat 112 von der ausgefahrenen in die eingefahrene Stellung überführt werden (Figur 3, Pfeil 122'). Dies führt dazu, dass die Schwenkeinheit 94 in der entgegengesetzten Schwenkrichtung um die Schwenkachse 102 verschwenkt wird.

Die Bürsteneinrichtung 28 umfasst vorliegend eine Welle 124, die eine Bürstenachse 126 definiert. An der Welle 124 können in an sich bekannter Weise Waschelemente 128 gehalten sein, beispielsweise streifenförmige Waschelemente oder borstenförmige Waschelemente.

Die Bürsteneinrichtung 28 ist bei der Vorrichtung 30 über eine Antriebseinheit 130 festgelegt. Die Antriebseinheit 130 dient zum Antreiben der Bürsteneinrichtung 28 um die Bürstenachse 126. Die Antriebseinheit 130 umfasst einen Antriebsmotor 132 zum Antreiben einer Antriebswelle 134 um eine Antriebsachse 136. Die Antriebsachse 136 ist vorliegend quer und insbesondere senkrecht zur Bürstenachse 126 ausgerichtet. Die Bürstenachse 126 und die Antriebsachse 136 sind windschief zueinander angeordnet.

Die Antriebseinheit 130 umfasst ferner ein Getriebe 138, um die Antriebskraft von der Antriebswelle 134 auf die Bürsteneinrichtung 28 zu übertragen.

Bei der Vorrichtung 30 ist das Getriebe 138 an der Unterseite des zweiten Schenkels 110 festgelegt. An der Unterseite des Getriebes 138 ist die Bürsteneinrichtung 28 festgelegt, beispielsweise mittels korrespondierender Flansche.

Eine kompakte Bauform wird dadurch erzielt, dass die Antriebseinheit 130 zumindest teilweise seitlich neben dem Schwenkorgan 96 und zusammen mit diesem unterhalb der Dreheinheit 50 angeordnet ist.

Nimmt die Schwenkeinheit 94 eine Grundstellung ein (Figur 2, 4 und 5), bei der das Kolbenzylinderaggregat 112 eingefahren ist, fluchtet die Bürstenachse 126 mit der Drehachse 62, so dass die Bürsteneinrichtung 28 koaxial zur Dreheinheit 50 ausgerichtet ist.

Durch Überführen des Kolbenzylinderaggregates 112 in die ausgefahrene Stellung kann die Bürsteneinrichtung 28 um die Schwenkachse 102 in eine Schwenkstellung verschwenkt werden. Der Schwenkwinkel beträgt beispielsweise mindestens ungefähr 10°, vorzugsweise mindestens ungefähr 20° (Figuren 1, 3 und 6).

An der Dreheinheit 50 sind Anschlagelemente 142 für die Schwenkeinheit 94 angeordnet, die ein korrespondierendes Anschlagelement 144 umfasst. Dieses ist vorliegend als Vorsprung des Schwenkwinkels 106 ausgestaltet.

Nachfolgend wird die Funktion der Fahrzeugwaschanlage 10 und der Vorrichtung 30 zum Reinigen des Fahrzeugs 10 erläutert.

Der Vorteil bei der Fahrzeugwaschanlage 10 besteht darin, eine an die Konturen des Fahrzeugs 16 angepasste Reinigung durchzuführen.

Günstig ist es, wenn die Fahrzeugwaschanlage 10 eine Erfassungseinrichtung 140 aufweist, um den Fahrzeugtyp und/oder Fahrzeugkonturen zu ermitteln. Insbesondere können Positionen, Neigungen und/oder Krümmungen der Seitenflächen und des Hecks des Fahrzeugs 16 ermittelt werden. Die Erfassungseinrichtung 140 kann zum Beispiel eine Kamera umfassen.

Zur Reinigung der Seitenflächen des Fahrzeugs 16 wird der Laufwagen 47 in Querrichtung 20 an die zur Reinigung optimale Position verschoben. Weist die Fahrzeugseitenfläche eine Neigung bezüglich der Vertikalen auf, kann die Schwenkeinheit 94 mittels des Schwenkorgans 96 von der Grundstellung in eine Schwenkstellung überführt und dadurch die Bürstenachse 126 schräg bezüglich der Vertikalen ausgerichtet werden (Figuren 1 und 3). Dadurch legen sich die Waschelemente 128 besser an die Fahrzeugfläche an. Der Anpressdruck ist hoch genug für eine zuverlässige Reinigung, aber nicht zu hoch, so dass eine Beschädigung des Fahrzeugs 16 vermieden wird.

Bei der Vorrichtung 30 ist vorgesehen, dass die Bürsteneinrichtung 28 nur einen vorgegebenen Schwenkwinkel relativ zur Vertikalen einnehmen kann, nämlich durch Ausfahren des Kolbenzylinderaggregates 112. Es kann bei einer andersartigen Ausführungsform vorgesehen sein, dass der Schwenkwinkel der Schwenkeinheit 94 um die Schwenkachse 102 und damit der Schwenkwinkel der Bürsteneinrichtung 28 vorgegeben werden kann. Dies kann insbesondere abhängig von dem Signal der Erfassungseinrichtung 140 erfolgen.

Das in der Zeichnung dargestellte Fahrzeug 16 weist geneigte Seitenflächen auf, weswegen eine Schrägstellung der Bürsteneinrichtung 28 von Vorteil ist. Kommt die Fahrzeugwaschanlage 10 zum Reinigen von Fahrzeugen mit im Wesentlichen vertikalen Seitenflächen zum Einsatz, kann eine Schrägstellung der Bürsteneinrichtung 28 unterbleiben (beispielsweise bei Kastenwagen).

Bei der Seitenreinigung des Fahrzeugs 16 nimmt die Dreheinheit 50 eine erste Betriebsstellung ein, in der das Kolbenzylinderaggregat 78 eingefahren ist (Figuren 1 bis 4). Dementsprechend wird die Bürsteneinrichtung 28 um die in diesem Fall parallel zur Längsrichtung 18 ausgerichtete Schwenkachse 102 verschwenkt.

Zum Reinigen des Fahrzeughecks wird die Dreheinheit 50 mittels des Kolbenzylinderaggregats 78 von der ersten Betriebsstellung in eine zweite Betriebsstellung überführt (Figuren 5 und 6). Dabei wird die Dreheinheit 50 wie vorstehend erläutert um die Drehachse 62 gedreht, im Wesentlichen um 90°. Auch die an der Dreheinheit 50 gehaltene Schwenkeinrichtung 36 wird gedreht, so dass die Schwenkachse 102 im Wesentlichen in Querrichtung 20 ausgerichtet ist.

Je nachdem, welche Neigung die Heckfläche des Fahrzeugs 16 aufweist, kann die Bürsteneinrichtung 28 mit vertikal ausgerichteter Bürstenachse 126 zum Reinigen des Fahrzeughecks eingesetzt werden, oder mit über die Schwenkeinheit 94 verschwenkter Bürstenachse 126.

Die Figur 6 zeigt den letzteren Fall. Nach der Reinigung der Seitenflächen dreht die Dreheinheit 50 von der ersten in die zweite Betriebsstellung. Die Schwenkstellung der Bürsteneinrichtung 28 wird dabei vorzugsweise beibehalten, weil mittels der Erfassungseinrichtung 140 erfasst worden ist, dass das Fahrzeugheck ebenfalls eine Neigung bezüglich der Vertikalen aufweist. Durch Verfahren des Laufwagens 47 in der Querrichtung 20 kann das Fahrzeugheck mit geneigter Bürsteneinrichtung 28 wirkungsvoll gereinigt werden. Auch in diesem Fall wird ein idealer Anpressdruck für eine zuverlässige Reinigung unter Vermeidung von Beschädigungen des Fahrzeugs 16 sichergestellt.

Wird mittels der Erfassungseinrichtung 140 indessen festgestellt, dass das Fahrzeugheck eine im Wesentlichen vertikale Erstreckung hat, kann die Heckreinigung mit vertikal ausgerichteter Bürsteneinrichtung 28 durchgeführt werden. Wird die Dreheinheit 50 mit schräggestellter Bürsteneinrichtung 28 gedreht, kann in diesem Fall das Kolbenzylinderaggregat 112 wieder eingefahren und die Bürsteneinrichtung 28 in die vertikale Stellung überführt werden. Umgekehrt kann die Bürsteneinrichtung 28 vor dem Drehen der Dreheinheit 50 in die vertikale Stellung überführt und anschließend die Dreheinheit 50 um die Drehachse 62 gedreht werden.

Es kann vorgesehen sein, dass die Ausrichtung der Bürsteneinrichtung 28 während der Seitenflächenreinigung und/oder der Heckreinigung mittels des Schwenkorgans 96 variiert werden kann, beispielsweise wenn Bereiche der Fahrzeugflächen mit unterschiedlicher Neigung und/oder Krümmung vorhanden sind. Auch komplexe Fahrzeugkonturen lassen sich dadurch zuverlässig reinigen.

Weiter kann vorgesehen sein, dass die Drehung der Dreheinheit 50 nicht in dem 90°-Schritt erfolgt, sondern sukzessive. Dies bietet die Möglichkeit, Übergangsbereiche von der Seitenfläche zum Heck besonders gut zu reinigen, während die Bürsteneinrichtung 28 sukzessive entlang des Übergangsbereichs von der Seitenfläche zum Heck bewegt wird. Schrittweise oder kontinuierlich kann die Dreheinheit 50 gedreht werden, vorzugsweise wird dabei die Schrägstellung der Bürsteneinrichtung 28 beibehalten, wenn die Fahrzeugflächen relativ zur Vertikalen geneigt und/oder gekrümmt sind.

Der Anpressdruck kann bei der Heckreinigung und bei der Frontreinigung durch Verfahren des Waschportals 12 in der Längsrichtung 18 variiert werden. Bei der Seitenreinigung kann der Anpressdruck durch Verfahren des Laufwagens 47 in der Querrichtung 20 variiert werden.

Im Ergebnis kann unter Einsatz der Vorrichtung 30 eine verbesserte Fahrzeugreinigung durchgeführt werden. Die Vorrichtung 30 weist eine kompakte Bauform auf. Die Drehung der Dreheinheit 50 um die vertikale Drehachse 62 erlaubt es, die bewegten Massen und daraus entstehende Momente gering zu halten.

Bei der Vorrichtung 30 ist eine Schrägstellung der Bürsteneinrichtung 28 zum Reinigen der Fahrzeugfront nicht vorgesehen. Bei einer vorteilhaften Ausführungsform einer erfindungsgemäßen Vorrichtung kann vorgesehen sein, dass die Dreheinheit 50 in zwei einander entgegengesetzte Richtungen gedreht werden kann, insbesondere um jeweils im Wesentlichen 90°.

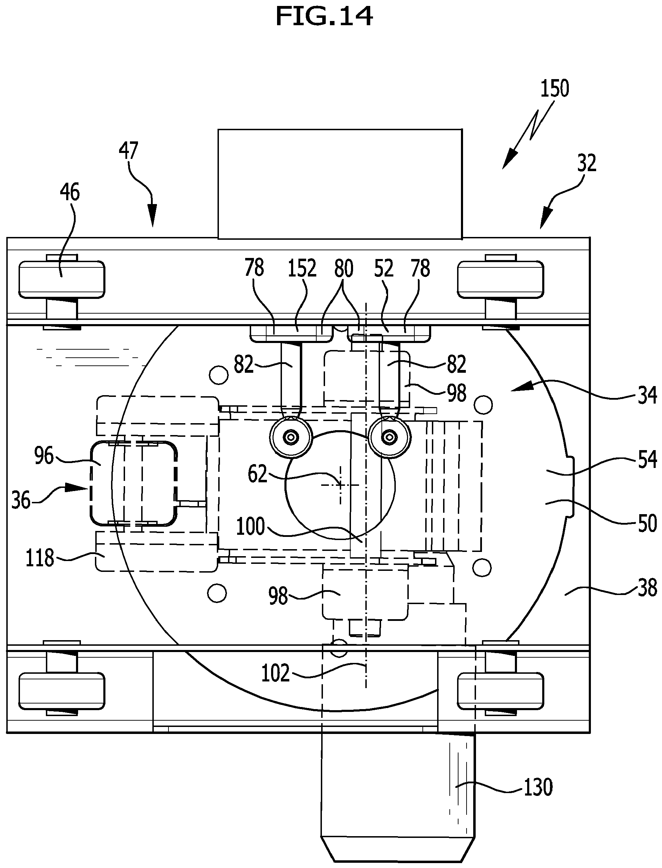

Eine derartige Ausführungsform einer erfindungsgemäßen Vorrichtung ist mit dem Bezugszeichen 150 belegt und in Figur 14 schematisch von oben dargestellt. Für gleiche oder gleichwirkende Merkmale und Bauteile werden identische Bezugszeichen benutzt.

Bei der Vorrichtung 150 umfasst die Dreheinrichtung 34 zwei Drehorgane 52, 152. Das Drehorgan 152 ist identisch zum Drehorgan 52 ausgestaltet. Mittels des Drehorgans 152 kann die Dreheinheit 50 um die Drehachse 62 gedreht werden, entgegengesetzt zu den Drehrichtungen 90/90' infolge des Drehorgans 52. Beim Ausfahren des Kolbenzylinderaggregates 78 wird die Dreheinheit 50 in Pfeilrichtung 90' gedreht, beim Einfahren in Pfeilrichtung 90. Dies erlaubt es, auch bei einer Reinigung der Fahrzeugfront die Bürsteneinrichtung 28 schrägzustellen und an die geneigte Fahrzeugfront anzupassen.

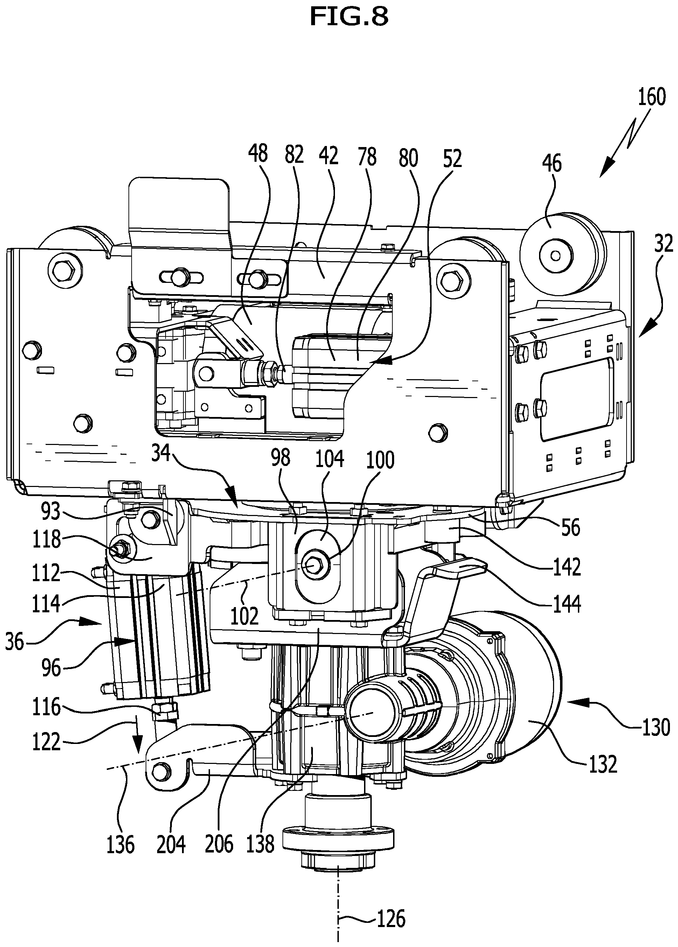

Nachfolgend wird auf eine in den Figuren 8 bis 13 dargestellte und mit dem Bezugszeichen 160 belegte vorteilhafte Ausführungsform einer erfindungsgemäßen Bürstenbefestigungsvorrichtung (vereinfachend Vorrichtung 160) eingegangen. Für gleiche und gleichwirkende Merkmale und Bauteile der Vorrichtungen 30 und 160 werden identische Bezugszeichen benutzt. Die mit der Vorrichtung 30 erzielbaren Vorteile können mit der Vorrichtung 160 ebenfalls erzielt werden. Diesbezüglich kann auf die voranstehenden Ausführungen verwiesen werden.

In funktioneller Sicht stimmen die Vorrichtungen 30 und 160 im Wesentlichen überein. Es wird lediglich auf die größten Unterschiede der Vorrichtungen 30 und 160 eingegangen, um Wiederholungen zu vermeiden. Auf obige Ausführungen wird verwiesen.

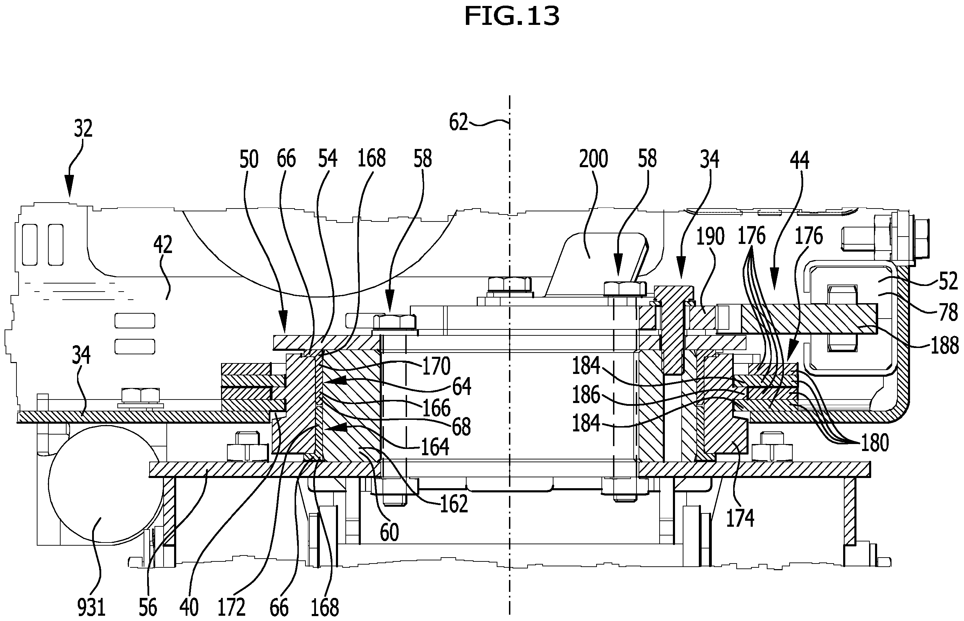

Zunächst wird auf die Beschaffenheit der Dreheinrichtung 34 und der Lagereinrichtung 64 bei der Vorrichtung 160 eingegangen. Diesbezüglich wird insbesondere auf Figur 13 verwiesen.

Die Dreheinheit 50 umfasst den ersten Drehkörper 54, der bei der Vorrichtung 160 als Ring ausgestaltet ist, und den zweiten Drehkörper 56. Der Drehkörper 56 ist abschnittsweise plattenförmig ausgestaltet, wie bei der Vorrichtung 30. Die Drehkörper 54, 56 sind mittels der Spannelemente bildenden Verbindungselemente 58, insbesondere Verschraubungen, miteinander verbunden.

Das Abstandselement 60 ist bei der Vorrichtung 160 als in der Öffnung 40 angeordneter Abstandsring 162 ausgestaltet. Der Abstandsring 162 ist koaxial zur Drehachse 62 ausgerichtet.

Die Vorrichtung 160 umfasst ein Lagerelement 164, vorliegend in Gestalt eines ringförmigen Gleitlagers. Das Lagerelement 164 ist radial außenseitig am Abstandsring 162 angeordnet und umfasst einen diesen umgebenden radialen Lagerabschnitt 166. Außerdem umfasst das Lagerelement 164 axiale Lagerabschnitte 168. Die axialen Lagerabschnitte 168 sind axial voneinander beabstandet und stehen vom radialen Lagerabschnitt 166 radial ab.

Im vorliegenden Fall ist das Lagerelement 164 zweigeteilt mit einem oberen ersten Segment 170 und einem unteren zweiten Segment 172. Die Segmente sind vorzugsweise identisch ausgestaltet.

Die Trageinrichtung 32 umfasst einen Statorkörper 174, der radial außerhalb des Lagerelementes 164 angeordnet und am Rand der Öffnung 40 positioniert ist. Der Statorkörper ist vorliegend ringförmig.

Der Abstandsring 162 und damit die Dreheinheit 50 sind in radialer Richtung relativ zum Statorkörper 174 über den radialen Lagerabschnitt 166 des Lagerelementes 164 gelagert. In axialer Richtung sind die Drehkörper 54, 56 über das Lagerelement 164 am Statorkörper 174 gelagert. Dabei ist jeder axiale Lagerabschnitt 164 einem Drehkörper 54, 56 zur Lagerung oben bzw. unten zugeordnet.

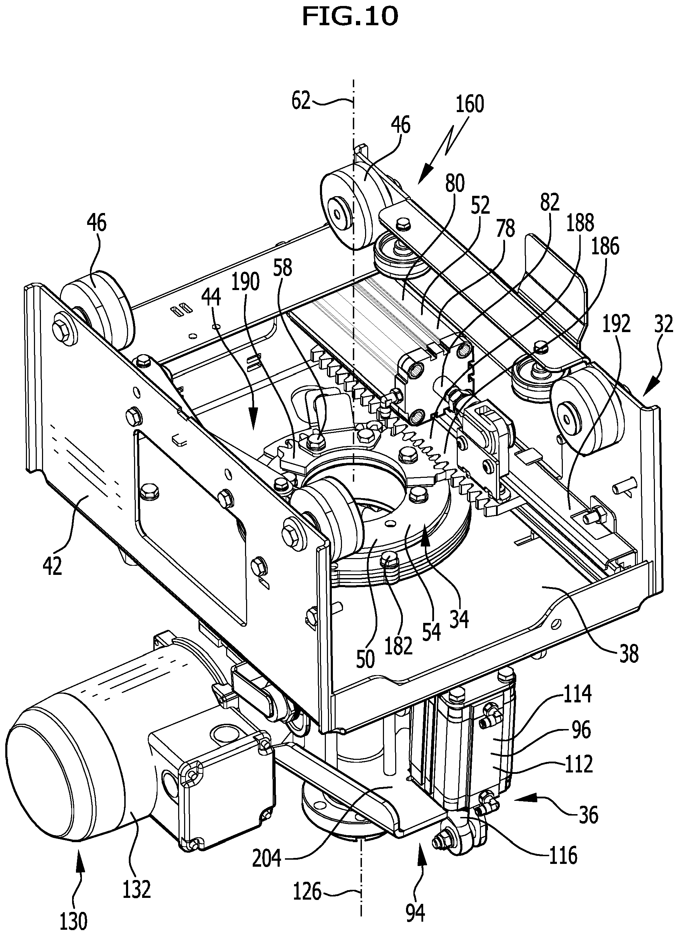

Der Statorkörper 174 ist am Tragkörper 38 mittels Halteelementen 176 gehalten. Die Halteelemente 176 bilden vorliegend ein Scheibenpaket 178 mit einer Mehrzahl von übereinander angeordneten und im Wesentlichen ringförmigen Scheiben 180. Das Scheibenpaket 178 ist mittels Verbindungselementen 182, vorliegend durch Verschraubung, am Tragkörper 38 festgelegt (Figuren 10 und 13).

Das Scheibenpaket 178 weist radial nach innen ragende Vorsprünge 184 auf, die mit einem Vorsprung 186 des Statorkörpers 174 radial nach außen in Eingriff stehen. Auf diese Weise ist der Statorkörper 174 in radialer und axialer Richtung am Scheibenpaket 178 und über dieses am Tragkörper 38 unbeweglich fixiert.

Die Dreheinrichtung 34 umfasst eine Antriebsbahn 188 und ein mit dieser zusammenwirkendes Antriebselement 190. Die Antriebsbahn 188 ist an einer Führung 192 der Trageinrichtung 32 verschieblich geführt. Der Kolben 82 ist an der Antriebsbahn 188 festgelegt, um diese längs der Führung 192 zu verschieben (Doppelpfeil 194).

Das Antriebselement 190 und die Antriebsbahn 188 stehen miteinander in Eingriff. Dabei ist die Antriebsbahn 188 als Zahnstange 196 ausgebildet, das Antriebselement 190 als Zahnradabschnitt 198, beispielsweise als Zahnringabschnitt. Der Zahnradabschnitt 198 ist am Drehkörper 54 festgelegt, beispielsweise ist er mittels der Verbindungselemente 58 drehfest mit diesem verbunden (Figuren 10 und 13).

Beim Ausfahren des Kolbenzylinderaggregates 78 wird die Zahnstange 196 verschoben. Der mit dieser kämmende Zahnradabschnitt 198 wird zum Drehen der Dreheinheit 50 um die Drehachse 62 gedreht. Eine besonders zuverlässige Funktion der Dreheinrichtung 34 ist dadurch sichergestellt.

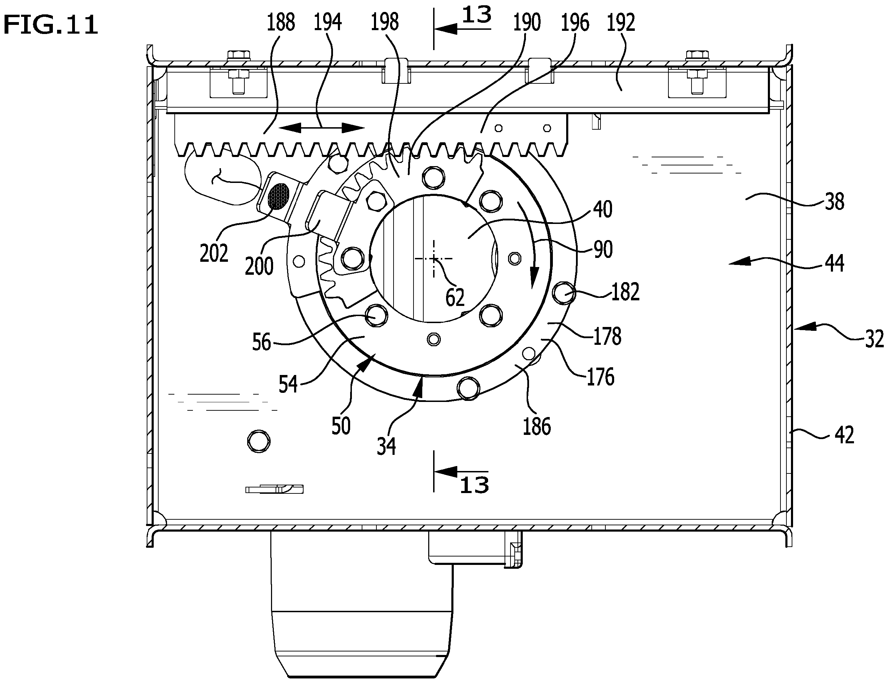

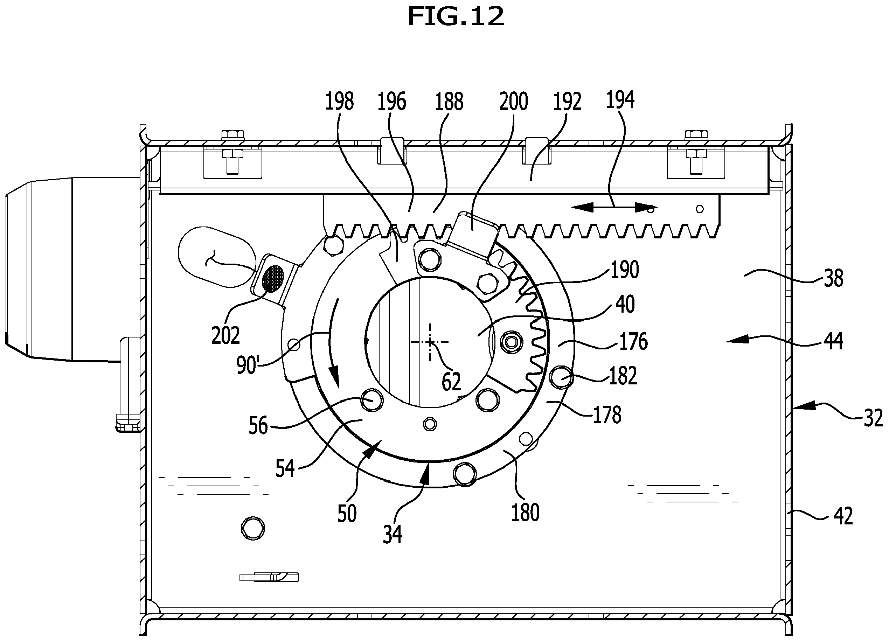

Am Antriebselement 190 ist ein Vorsprung 200 angeordnet, dessen Position mittels einer am Tragkörper 38 angeordneten Sensoreinrichtung 202 erkennbar ist (Figuren 11 und 12). Die Sensoreinrichtung 202 ist zum Beispiel optisch ausgestaltet und steht mit der Steuereinrichtung 88 in Wirkverbindung. Nimmt das Kolbenzylinderaggregat 78 die eingefahrene Stellung ein (Figur 10), sollte die Anwesenheit des Vorsprungs 200 seitlich neben der Sensoreinrichtung 202 festgestellt werden. Ist dies nicht der Fall, liegt eine Störung vor. Hierüber kann ein Betreiber der Fahrzeugwaschanlage 10 informiert werden.

Bei der Vorrichtung 160 umfasst die Schwenkeinrichtung 36 anstelle des Schwenkwinkels 106 ein erstes Schwenkteil 204 und ein zweites Schwenkteil 206. Das erste Schwenkteil 204 ist am Kolben 116 des Kolbenzylinderaggregates 112 festgelegt. Das zweite Schwenkteil 206 ist am Schwenklager 98 verschwenkbar gelagert. Die Schwenkteile 204, 206 sind voneinander beabstandet und miteinander über die Antriebseinheit 130 verbunden, zum Beispiel mittels eines Gehäuses des Getriebes 138. Die Bürsteneinrichtung 28 ist unten am Schwenkteil 204 festgelegt (dies ist in der Zeichnung nicht dargestellt).

Die Vorrichtung 160 kann bei einer erfindungsgemäßen Fahrzeugwaschanlage, insbesondere der Fahrzeugwaschanlage 10, anstelle der Vorrichtung 30 zum Einsatz kommen. Durch Ausfahren des Kolbenzylinderaggregates 78 wird die Zahnstange 196 verschoben, hierdurch wird die Dreheinheit 50 von der ersten Betriebsstellung in die zweite Betriebsstellung um im Wesentlichen 90° gedreht. Umgekehrt kann die Zahnstange 196 durch Einfahren des Kolbenzylinderaggregates 78 verschoben und die Dreheinheit 50 in der entgegengesetzten Richtung verdreht werden (Figuren 11 und 12).

Beim Drehen der Dreheinheit 50 wird auch die Schwenkeinrichtung 36 gedreht, wie dies bei der Vorrichtung 30 der Fall ist. Mittels des Schwenkorgans 96 kann die Bürsteneinrichtung 28 wie bei der Vorrichtung 30 von einer vertikalen Position, in der sie koaxial zur Dreheinheit 50 ausgerichtet ist, in eine verschwenkte, geneigte Position überführt werden. Diese geneigte Ausrichtung der Bürsteneinrichtung 28 ist in der Zeichnung nicht dargestellt.

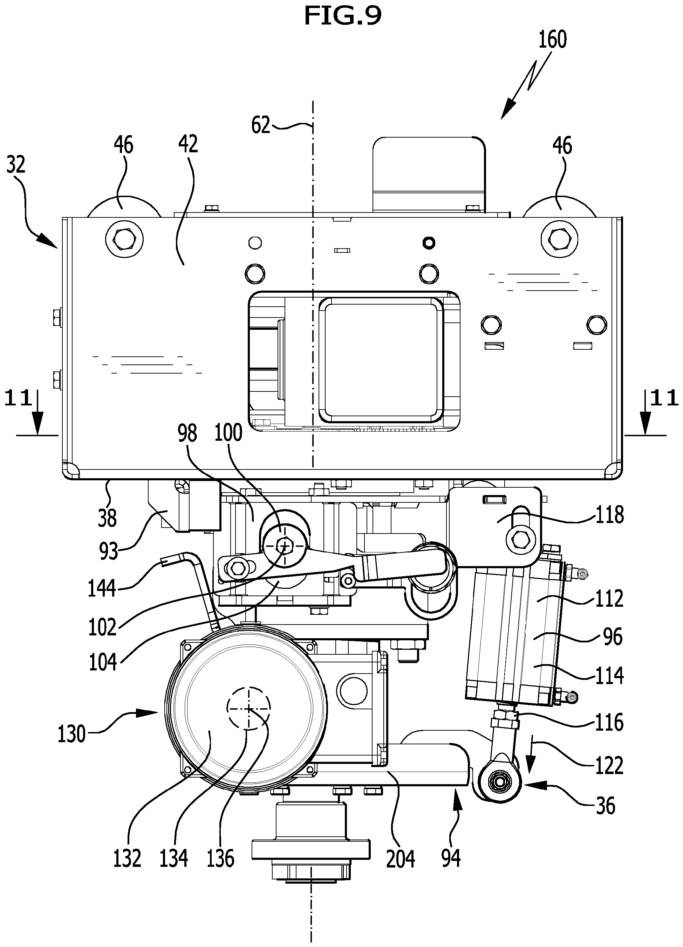

Die Figur 9 zeigt die Vorrichtung 160 von vorne, d.h. bei einer Blickrichtung auf eine Vorderseite des nicht gezeigten Waschportals 12 und Fahrzeugs 16. In diesem Fall ist die Schwenkachse 102 wie bei der Vorrichtung 30 parallel zur Längsrichtung 18 ausgerichtet. Durch Drehen der Dreheinheit 50 wird die Schwenkachse 102 wie bei der Vorrichtung 30 in Querrichtung 20 ausgerichtet, wenn die Vorrichtung 160 zur Reinigung des Fahrzeughecks zum Einsatz kommt (Figur 12).

Die vorstehende Beschreibung umfasst insbesondere die Offenbarung der anhand nachfolgender Sätze definierten Ausführungsformen einer erfindungsgemäßen Bürstenbefestigungsvorrichtung und einer erfindungsgemäßen Fahrzeugwaschanlage:
1. Bürstenbefestigungsvorrichtung zum Befestigen einer Bürsteneinrichtung (28) in einer Fahrzeugwaschanlage (10), welche Bürstenbefestigungsvorrichtung (30; 150; 160) zum Halten an einem Träger (26) der Fahrzeugwaschanlage (10) eine Trageinrichtung (32) umfasst, eine Dreheinrichtung (34) mit einer an der Trageinrichtung (32) drehbar gehaltenen Dreheinheit (50) und mit mindestens einem Drehorgan (52; 152), wobei die Dreheinheit (50) eine in Höhenrichtung ausgerichtete Drehachse (62) definiert und mittels des mindestens einen Drehorgans (52; 152) von einer ersten Betriebsstellung in mindestens eine zweite Betriebsstellung um die Drehachse (62) drehbar ist, eine an der Dreheinheit (50) gehaltene Schwenkeinrichtung (36), die eine relativ zur Dreheinheit (50) um eine im Winkel zur Drehachse (62) ausgerichtete Schwenkachse (102) schwenkbare Schwenkeinheit (94) umfasst, an der die Bürsteneinrichtung (28) mit in einer Höhenrichtung ausgerichteten Bürstenachse (126) festgelegt oder festlegbar ist, wobei die Schwenkeinrichtung (36) ein Schwenkorgan (96) umfasst zum Verschwenken der Schwenkeinheit (94) relativ zur Dreheinheit (50).
2. Bürstenbefestigungsvorrichtung nach Satz 1, dadurch gekennzeichnet, dass die Drehachse (62) senkrecht zu einer Aufstellfläche (14) für das Fahrzeug (16) und insbesondere vertikal ausgerichtet ist.
3. Bürstenbefestigungsvorrichtung nach einem der voranstehenden Sätze, dadurch gekennzeichnet, dass die Schwenkachse (102) parallel zu einer Aufstellfläche (14) für das Fahrzeug (16) und insbesondere horizontal ausgerichtet ist.
4. Bürstenbefestigungsvorrichtung nach einem der voranstehenden Sätze, dadurch gekennzeichnet, dass die Schwenkachse (102) quer und insbesondere senkrecht zur Drehachse (62) ausgerichtet ist.
5. Bürstenbefestigungsvorrichtung nach einem der voranstehenden Sätze, dadurch gekennzeichnet, dass die Bürsteneinrichtung (28) in einer Grundstellung der Schwenkeinheit (94) koaxial zur Dreheinheit (50) ausgerichtet ist.
6. Bürstenbefestigungsvorrichtung nach einem der voranstehenden Sätze, dadurch gekennzeichnet, dass die Schwenkeinheit (94) an einer Unterseite der Dreheinheit (50) gehalten ist, insbesondere dass die Schwenkachse (102) unterhalb der Trageinrichtung (32) angeordnet ist.
7. Bürstenbefestigungsvorrichtung nach einem der voranstehenden Sätze, dadurch gekennzeichnet, dass die Trageinrichtung (32) einen am Träger (26) der Fahrzeugwaschanlage (10) beweglich angeordneten Laufwagen (47) umfasst oder ausbildet.
8. Bürstenbefestigungsvorrichtung nach Satz 7, dadurch gekennzeichnet, dass am Laufwagen (47) Rollen (46) zum Verfahren oder Kufen zum Verschieben des Laufwagens (47) relativ zum Träger (26) gehalten sind.
9. Bürstenbefestigungsvorrichtung nach Satz 7 oder 8, dadurch gekennzeichnet, dass am Laufwagen (47) eine Antriebseinheit (48) gehalten ist, mittels der der Laufwagen (47) relativ zum Träger (26) bewegbar ist.
10. Bürstenbefestigungsvorrichtung nach einem der Sätze 7 bis 9, dadurch gekennzeichnet, dass das mindestens eine Drehorgan (52; 152) oberhalb eines Tragkörpers (38) der Trageinrichtung (32) angeordnet ist, an dem die Dreheinheit (50) gehalten ist.
11. Bürstenbefestigungsvorrichtung nach einem der voranstehenden Sätze, dadurch gekennzeichnet, dass das mindestens eine Drehorgan (52; 152) und/oder das Schwenkorgan (96) pneumatisch, hydraulisch, mechanisch, elektrisch und/oder magnetisch ausgestaltet sind.
12. Bürstenbefestigungsvorrichtung nach einem der voranstehenden Sätze, dadurch gekennzeichnet, dass das mindestens eine Drehorgan (52; 152) ein Kolbenzylinderaggregat (78) umfasst oder bildet, wobei ein Zylinder (80) des Kolbenzylinderaggregats (78) an der Trageinrichtung (32) festgelegt ist und ein Kolben (82) des Kolbenzylinderaggregats (78) an der Dreheinheit (50) festgelegt oder mit dieser gekoppelt ist.
13. Bürstenbefestigungsvorrichtung nach einem der voranstehenden Sätze, dadurch gekennzeichnet, dass die Dreheinrichtung (34) eine Antriebsbahn (188) umfasst oder bildet und mindestens ein mit dieser in Eingriff stehendes Antriebselement (190), wobei die Antriebsbahn (188) am mindestens einen Drehorgan (52; 152) festgelegt ist und das Antriebselement (190) an der Dreheinheit (50) oder umgekehrt.
14. Bürstenbefestigungsvorrichtung nach Satz 13, dadurch gekennzeichnet, dass die Antriebsbahn (188) als Zahnstange (196) und das Antriebselement (190) als Zahnrad oder Zahnradabschnitt (198) ausgestaltet sind.
15. Bürstenbefestigungsvorrichtung nach Satz 13 oder 14, dadurch gekennzeichnet, dass die Antriebsbahn (188) relativ zur Trageinrichtung (32) verschieblich ausgestaltet ist, insbesondere dass an der Trageinrichtung (32) eine Führung (192) für die Antriebsbahn (188) angeordnet ist.
16. Bürstenbefestigungsvorrichtung nach einem der Sätze 13 bis 15, dadurch gekennzeichnet, dass die Antriebsbahn (188) oder das Antriebselement (190) an einem Kolbenzylinderaggregat (78) des mindestens einen Drehorgans (52; 152) festgelegt ist.
17. Bürstenbefestigungsvorrichtung nach einem der voranstehenden Sätze, dadurch gekennzeichnet, dass die Dreheinheit (50) mittels des mindestens einen Drehorgans (52; 152) in zumindest einer Drehrichtung (90) um mindestens 90° oder im Wesentlichen 90° drehbar ist.
18. Bürstenbefestigungsvorrichtung nach einem der voranstehenden Sätze, dadurch gekennzeichnet, dass die Dreheinheit (50) mittels des mindestens einen Drehorgans (52; 152) in zwei einander entgegengesetzten Drehrichtungen (90) von der ersten Betriebsstellung in eine zweite Betriebsstellung drehbar ist, insbesondere um jeweils 90° oder im Wesentlichen 90°.
19. Bürstenbefestigungsvorrichtung nach einem der voranstehenden Sätze, dadurch gekennzeichnet, dass die Dreheinrichtung (34) zwei Drehorgane (52; 152) umfasst, wobei die Dreheinheit (50) mit den Drehorganen (52; 152) in einander entgegengesetzten Drehrichtungen (90) von der ersten Betriebsstellung in eine jeweilige zweite Betriebsstellung drehbar ist.
20. Bürstenbefestigungsvorrichtung nach einem der voranstehenden Sätze, dadurch gekennzeichnet, dass die Trageinrichtung (32) mindestens ein Anschlagelement (93) umfasst oder ausbildet für die Dreheinheit (50) bei deren Drehung von der ersten Betriebsstellung in die mindestens eine zweite Betriebsstellung und/oder umgekehrt.
21. Bürstenbefestigungsvorrichtung nach einem der voranstehenden Sätze, dadurch gekennzeichnet, dass die Bürstenbefestigungsvorrichtung (160) eine Sensoreinrichtung (202) umfasst oder bildet zum Ermitteln, ob die Dreheinheit (50) die erste Betriebsstellung und/oder die zweite Betriebsstellung einnimmt.
22. Bürstenbefestigungsvorrichtung nach einem der voranstehenden Sätze, dadurch gekennzeichnet, dass die Bürstenbefestigungsvorrichtung (30; 150; 160) eine Lagereinrichtung (64) umfasst zur Lagerung der Dreheinheit (50) an der Trageinrichtung (32).
23. Bürstenbefestigungsvorrichtung nach Satz 22, dadurch gekennzeichnet, dass die Lagereinrichtung (64) mindestens ein axiales Lager (66) umfasst und/oder mindestens ein radiales Lager (68), bezogen auf die Drehachse (62), vorzugsweise dass das mindestens eine axiale Lager (66) und/oder das mindestens eine radiale Lager (68) als Gleitlager ausgebildet ist.
24. Bürstenbefestigungsvorrichtung nach Satz 23, dadurch gekennzeichnet, dass mindestens ein Lagerelement (164) vorgesehen ist, das ein axiales Lager (66) und ein radiales Lager (68) ausbildet.
25. Bürstenbefestigungsvorrichtung nach einem der voranstehenden Sätze, dadurch gekennzeichnet, dass die Dreheinheit (50) einen ersten Drehkörper (54) oberhalb eines Tragkörpers (38) der Trageinrichtung (32) umfasst und einen zweiten Drehkörper (56) unterhalb des Tragkörpers (38), und wobei der Tragkörper (38) eine Öffnung (40) umfasst oder bildet, wobei die Drehkörper (54, 56) insbesondere mittels mindestens eines Verbindungselementes (58) durch die Öffnung (40) hindurch miteinander verbunden sind.
26. Bürstenbefestigungsvorrichtung nach Satz 25, dadurch gekennzeichnet, dass das mindestens eine Verbindungselement (40) als Spannelement ausgebildet ist, mit dem die Drehkörper (54, 56) relativ zueinander verspannt sind.
27. Bürstenbefestigungsvorrichtung nach Satz 25 oder 26, dadurch gekennzeichnet, dass in der Öffnung (40) mindestens ein zwischen den Drehkörpern (54, 56) positioniertes Abstandselement (60) angeordnet ist, insbesondere dass das Abstandselement (60) als koaxial zur Drehachse (62) ausgerichteter Abstandsring (162) ausgebildet ist und/oder dass als Abstandselemente (60) die Verbindungselemente (58) umgebende Abstandshülsen vorgesehen sind.
28. Bürstenbefestigungsvorrichtung nach Satz 27, dadurch gekennzeichnet, dass am Rand der Öffnung (40) ein Statorkörper (174) der Trageinrichtung (32) festgelegt ist, wobei das Abstandselement (60) über ein Lagerelement (164) radial relativ zum Statorkörper (174) gelagert ist und mindestens ein Drehkörper (54, 56) über das Lagerelement (164) axial relativ zum Statorkörper (174) gelagert ist.
29. Bürstenbefestigungsvorrichtung nach Satz 28, dadurch gekennzeichnet, dass der Statorkörper (174) über ihn in Umfangsrichtung der Drehachse (62) umgebende Halteelemente (176) am Rand der Öffnung (40) unbeweglich fixiert ist, wobei die Halteelemente (176) insbesondere ein mit dem Statorkörper (174) radial und/oder axial in Eingriff stehendes Scheibenpaket (178) bilden oder umfassen.
30. Bürstenbefestigungsvorrichtung nach einem der Sätze 25 bis 29, dadurch gekennzeichnet, dass entlang des Randes der Öffnung (40) Trägerelemente (70) angeordnet sind, die jeweils ein axiales Lager (66) und/oder ein radiales Lager (68) halten, wobei ein Drehkörper (54, 56) an den axialen Lagern (66) anliegt.
31. Bürstenbefestigungsvorrichtung nach Satz 30, dadurch gekennzeichnet, dass über die radialen Lager (68) eine jeweilige Rolle (74) relativ zum Trägerelement (70) drehbar gelagert ist, an der die Dreheinheit (50) bei Drehung um die Drehachse (62) abrollt.
32. Bürstenbefestigungsvorrichtung nach einem der voranstehenden Sätze, dadurch gekennzeichnet, dass die Schwenkeinheit (94) mittels des Schwenkorgans (96) von einer Grundstellung in mindestens eine Schwenkstellung um mindestens 10° schwenkbar ist, vorzugsweise um mindestens 20°.
33. Bürstenbefestigungsvorrichtung nach einem der voranstehenden Sätze, dadurch gekennzeichnet, dass die Schwenkeinheit (94) mittels des Schwenkorgans (96) von einer Grundstellung in zwei einander entgegengesetzte Richtungen schwenkbar und in eine jeweilige Schwenkstellung überführbar ist.
34. Bürstenbefestigungsvorrichtung nach einem der voranstehenden Sätze, dadurch gekennzeichnet, dass das mindestens eine Schwenkorgan (96) ein Kolbenzylinderaggregat (112) umfasst oder bildet, wobei ein Zylinder (114) des Kolbenzylinderaggregats (112) an der Dreheinheit (50) festgelegt ist und ein Kolben (116) des Kolbenzylinderaggregats (112) an der Schwenkeinheit (94) festgelegt oder mit dieser gekoppelt ist.
35. Bürstenbefestigungsvorrichtung nach einem der voranstehenden Sätze, dadurch gekennzeichnet, dass die Bürstenbefestigungsvorrichtung (60; 150; 160) eine Antriebseinheit (130) zum Antreiben der Bürsteneinrichtung (28) umfasst und dass die Antriebseinheit (130) an der Schwenkeinrichtung (36) festlegt ist oder dass die Antriebseinheit (130) an der Schwenkeinheit (94) angeordnet oder von dieser umfasst ist.
36. Bürstenbefestigungsvorrichtung nach Satz 35, dadurch gekennzeichnet, dass eine Antriebswelle (134) der Antriebseinheit (130) eine Antriebsachse (136) definiert und dass die Antriebsachse (136) quer und insbesondere senkrecht zur Bürstenachse (126) ausgerichtet ist.
37. Bürstenbefestigungsvorrichtung nach einem der Sätze 35 bis 36, dadurch gekennzeichnet, dass die Antriebseinheit (130) zumindest teilweise im Wesentlichen seitlich neben dem Schwenkorgan (96) positioniert ist.
38. Bürstenbefestigungsvorrichtung nach einem der voranstehenden Sätze, dadurch gekennzeichnet, dass die Schwenkeinheit (94) einen Schwenkwinkel (106) umfasst oder ausbildet mit einem ersten Schenkel (108), an dem das Schwenkorgan (96) angreift und einem zweiten Schenkel (110), der an der Dreheinheit (50) verschwenkbar gelagert ist, und dass die Antriebseinheit (130) an einer Unterseite des zweiten Schenkels (110) gehalten ist.
39. Bürstenbefestigungsvorrichtung nach einem der Sätze 1 bis 37, dadurch gekennzeichnet, dass die Schwenkeinheit (94) ein erstes Schwenkteil (204) umfasst, an dem das Schwenkorgan (96) angreift und ein im Abstand zum ersten Schwenkteil (204) angeordnetes zweites Schwenkteil (206), das an der Dreheinheit (50) verschwenkbar gelagert ist, und dass die Antriebseinheit (130) zumindest teilweise zwischen den Schwenktei-len (204, 206) angeordnet ist und diese miteinander verbindet.
40. Bürstenbefestigungsvorrichtung nach einem der voranstehenden Sätze, dadurch gekennzeichnet, dass an der Dreheinheit (50) ein Schwenklager (98) mit einem Dämpfungselement (104) für eine schwingungsgedämpfte Lagerung der Schwenkeinheit (94) gebildet ist.
41. Bürstenbefestigungsvorrichtung nach einem der voranstehenden Sätze, dadurch gekennzeichnet, dass zwischen der Schwenkeinheit (94) und der Dreheinheit (50) mindestens ein Dämpfungselement angeordnet ist zum Dämpfen der Schwenkbewegung.
42. Bürstenbefestigungsvorrichtung nach einem der voranstehenden Sätze, dadurch gekennzeichnet, dass die Dreheinheit (50) mindestens ein Anschlagelement (142) umfasst oder ausbildet für die Schwenkeinheit (94) bei deren Verschwenkung relativ zur Dreheinheit (50).
43. Fahrzeugwaschanlage, umfassend mindestens eine Bürstenbefestigungsvorrichtung (30; 150; 160) nach einem der voranstehenden Sätze und eine daran festgelegte Bürsteneinrichtung (28).

## Patentansprüche

1. Bürstenbefestigungsvorrichtung zum Befestigen einer Bürsteneinrichtung (28) in einer Fahrzeugwaschanlage (10), welche Bürstenbefestigungsvorrichtung (30; 150; 160) zum Halten an einem Träger (26) der Fahrzeugwaschanlage (10) eine Trageinrichtung (32) umfasst, eine Dreheinrichtung (34) mit einer an der Trageinrichtung (32) drehbar gehaltenen Dreheinheit (50) und mit mindestens einem Drehorgan (52; 152), wobei die Dreheinheit (50) eine in Höhenrichtung ausgerichtete Drehachse (62) definiert und mittels des mindestens einen Drehorgans (52; 152) von einer ersten Betriebsstellung in mindestens eine zweite Betriebsstellung um die Drehachse (62) drehbar ist, eine an der Dreheinheit (50) gehaltene Schwenkeinrichtung (36), die eine relativ zur Dreheinheit (50) um eine im Winkel zur Drehachse (62) ausgerichtete Schwenkachse (102) schwenkbare Schwenkeinheit (94) umfasst, an der die Bürsteneinrichtung (28) mit in einer Höhenrichtung ausgerichteten Bürstenachse (126) festgelegt oder festlegbar ist, wobei die Schwenkeinrichtung (36) ein Schwenkorgan (96) umfasst zum Verschwenken der Schwenkeinheit (94) relativ zur Dreheinheit (50).

2. Bürstenbefestigungsvorrichtung nach Anspruch 1, **dadurch gekennzeichnet, dass** die Drehachse (62) senkrecht zu einer Aufstellfläche (14) für das Fahrzeug (16) und insbesondere vertikal ausgerichtet ist und/oder dass die Schwenkachse (102) parallel zu einer Aufstellfläche (14) für das Fahrzeug (16) und insbesondere horizontal ausgerichtet ist.

3. Bürstenbefestigungsvorrichtung nach einem der voranstehenden Ansprüche, **dadurch gekennzeichnet, dass** die Schwenkeinheit (94) an einer Unterseite der Dreheinheit (50) gehalten ist, insbesondere dass die Schwenkachse (102) unterhalb der Trageinrichtung (32) angeordnet ist.

4. Bürstenbefestigungsvorrichtung nach einem der voranstehenden Ansprüche, **dadurch gekennzeichnet, dass** die Trageinrichtung (32) einen am Träger (26) der Fahrzeugwaschanlage (10) beweglich angeordneten Laufwagen (47) umfasst oder ausbildet, insbesondere dass das mindestens eine Drehorgan (52; 152) oberhalb eines Tragkörpers (38) der Trageinrichtung (32) angeordnet ist, an dem die Dreheinheit (50) gehalten ist.

5. Bürstenbefestigungsvorrichtung nach einem der voranstehenden Ansprüche, **dadurch gekennzeichnet, dass** die Dreheinrichtung (34) eine vorzugsweise relativ zur Trageinrichtung (32) verschieblich ausgestaltete Antriebsbahn (188) umfasst oder bildet und mindestens ein mit dieser in Eingriff stehendes Antriebselement (190), wobei die Antriebsbahn (188) am mindestens einen Drehorgan (52; 152) festgelegt ist und das Antriebselement (190) an der Dreheinheit (50) oder umgekehrt.

6. Bürstenbefestigungsvorrichtung nach Anspruch 5, **dadurch gekennzeichnet, dass** die Antriebsbahn (188) als Zahnstange (196) und das Antriebselement (190) als Zahnrad oder Zahnradabschnitt (198) ausgestaltet sind.

7. Bürstenbefestigungsvorrichtung nach Anspruch 5 oder 6, **dadurch gekennzeichnet, dass** die Antriebsbahn (188) oder das Antriebspelement (190) an einem Kolbenzylinderaggregat (78) des mindestens einen Drehorgans (52; 152) festgelegt ist.

8. Bürstenbefestigungsvorrichtung nach einem der voranstehenden Ansprüche, **dadurch gekennzeichnet, dass** die Dreheinheit (50) mittels des mindestens einen Drehorgans (52; 152) in zumindest einer Drehrichtung (90) um mindestens 90° oder im Wesentlichen 90° drehbar ist und/oder dass die Schwenkeinheit (94) mittels des Schwenkorgans (96) von einer Grundstellung in mindestens eine Schwenkstellung um mindestens 10° schwenkbar ist, vorzugsweise um mindestens 20°.

9. Bürstenbefestigungsvorrichtung nach einem der voranstehenden Ansprüche, **dadurch gekennzeichnet, dass** die Dreheinheit (50) einen ersten Drehkörper (54) oberhalb eines Tragkörpers (38) der Trageinrichtung (32) umfasst und einen zweiten Drehkörper (56) unterhalb des Tragkörpers (38), und wobei der Tragkörper (38) eine Öffnung (40) umfasst oder bildet, wobei die Drehkörper (54, 56) insbesondere mittels mindestens eines Verbindungselementes (58) durch die Öffnung (40) hindurch miteinander verbunden sind.

10. Bürstenbefestigungsvorrichtung nach Anspruch 9, **dadurch gekennzeichnet, dass** das mindestens eine Verbindungselement (40) als Spannelement ausgebildet ist, mit dem die Drehkörper (54, 56) relativ zueinander verspannt sind.

11. Bürstenbefestigungsvorrichtung nach Anspruch 9 oder 10, **dadurch gekennzeichnet, dass** in der Öffnung (40) mindestens ein zwischen den Drehkörpern (54, 56) positioniertes Abstandselement (60) angeordnet ist, insbesondere dass das Abstandselement (60) als koaxial zur Drehachse (62) ausgerichteter Abstandsring (162) ausgebildet ist und/oder dass als Abstandselemente (60) die Verbindungselemente (58) umgebende Abstandshülsen vorgesehen sind.

12. Bürstenbefestigungsvorrichtung nach einem der Ansprüche 9 bis 11, **dadurch gekennzeichnet, dass** entlang des Randes der Öffnung (40) Trägerelemente (70) angeordnet sind, die jeweils ein axiales Lager (66) und/oder ein radiales Lager (68) halten, wobei ein Drehkörper (54, 56) an den axialen Lagern (66) anliegt.

13. Bürstenbefestigungsvorrichtung nach einem der voranstehenden Ansprüche, **dadurch gekennzeichnet, dass** die Bürstenbefestigungsvorrichtung (60; 150; 160) eine Antriebseinheit (130) zum Antreiben der Bürsteneinrichtung (28) umfasst und dass die Antriebseinheit (130) an der Schwenkeinrichtung (36) festlegt ist oder dass die Antriebseinheit (130) an der Schwenkeinheit (94) angeordnet oder von dieser umfasst ist.

14. Bürstenbefestigungsvorrichtung nach einem der voranstehenden Ansprüche, **dadurch gekennzeichnet, dass** die Schwenkeinheit (94) einen Schwenkwinkel (106) umfasst oder ausbildet mit einem ersten Schenkel (108), an dem das Schwenkorgan (96) angreift und einem zweiten Schenkel (110), der an der Dreheinheit (50) verschwenkbar gelagert ist, und dass die Antriebseinheit (130) an einer Unterseite des zweiten Schenkels (110) gehalten ist oder dass die Schwenkeinheit (94) ein erstes Schwenkteil (204) umfasst, an dem das Schwenkorgan (96) angreift und ein im Abstand zum ersten Schwenkteil (204) angeordnetes zweites Schwenkteil (206), das an der Dreheinheit (50) verschwenkbar gelagert ist, und dass die Antriebseinheit (130) zumindest teilweise zwischen den Schwenkteilen (204, 206) angeordnet ist und diese miteinander verbindet.

15. Bürstenbefestigungsvorrichtung nach einem der voranstehenden Ansprüche, **dadurch gekennzeichnet, dass** an der Dreheinheit (50) ein Schwenklager (98) mit einem Dämpfungselement (104) für eine schwingungsgedämpfte Lagerung der Schwenkeinheit (94) gebildet ist und/oder dass zwischen der Schwenkeinheit (94) und der Dreheinheit (50) mindestens ein Dämpfungselement angeordnet ist zum Dämpfen der Schwenkbewegung.

16. Fahrzeugwaschanlage, umfassend mindestens eine Bürstenbefestigungsvorrichtung (30; 150; 160) nach einem der voranstehenden Ansprüche und eine daran festgelegte Bürsteneinrichtung (28).
